(19) 

Europäisches Patentamt
European Patent Office
Office européen des brevets

(11) **EP 4 711 756 A1**

(12) **EUROPEAN PATENT APPLICATION**
published in accordance with Art. 153(4) EPC

(43) Date of publication:
**18.03.2026 Bulletin 2026/12**

(21) Application number: **24806891.8**

(22) Date of filing: **05.04.2024**

(51) International Patent Classification (IPC):
*G01N 29/06* (2006.01)     *A01K 61/10* (2017.01)
*G01N 23/046* (2018.01)    *G01N 24/00* (2006.01)

(52) Cooperative Patent Classification (CPC):
**A01K 61/10; G01N 23/046; G01N 24/00;
G01N 29/06**

(86) International application number:
**PCT/JP2024/014128**

(87) International publication number:
**WO 2024/236937 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 JP 2023079231**

(71) Applicant: **Nissui Corporation
Tokyo 105-8676 (JP)**

(72) Inventors:
• **FUJII, Risa
Saiki-shi, Oita 876-1204 (JP)**
• **OHTA, Takashi
Saiki-shi, Oita 876-1204 (JP)**
• **MORISHIMA, Kagayaki
Saiki-shi, Oita 876-1204 (JP)**

(74) Representative: **Mewburn Ellis LLP
Aurora Building
Counterslip
Bristol BS1 6BX (GB)**

(54) **METHOD FOR ESTIMATING AMOUNT RED MUSCLE, METHOD FOR ESTIMATING AMOUNT OF PYLORIC CAECUM, METHOD FOR PRODUCING PROCESSED PRODUCT OF SALTWATER FISH, METHOD FOR FARMING SALTWATER FISH, ANALYSIS DEVICE, IDENTIFIED PRODUCT OF SALTWATER FISH, AND PROCESSED PRODUCT GROUP OF SALTWATER FISH**

(57) A method for estimating an amount of a red muscle includes: an information acquisition step of acquiring information on a red muscle in a fish body of a marine fish by non-destructive inspection; and an estimation step of estimating an amount of the red muscle included in the fish body based on the information. An analysis device includes: a non-destructive inspection unit that acquires information on a red muscle in a fish body of a marine fish by non-destructive inspection; and a red muscle estimation unit that estimates an amount of the red muscle included in the fish body based on the information.

**Fig.1**

## Description

Technical Field

The present disclosure relates to a method for estimating an amount of a red muscle, a method for estimating an amount of a pyloric caeca, a method for producing a processed product of a marine fish, a method for farming a marine fish, an analysis device, an identified product of a marine fish, and a processed product group of a marine fish.

Background Art

In a case where a marine fish is processed into a fillet, a block, sliced raw fish, and the like and distributed, the appearance of the processed product greatly affects willingness to buy of consumers. For example, a red muscle contained in a fish body of a marine fish changes in color tone faster than an white muscle. When a processed product of a marine fish contains a red muscle with a changed color tone, a commodity value is reduced. Thus, Patent Document 1 proposes a technique for maintaining the color tone of a red muscle of raw fish. Patent Document 2 proposes a technique for providing a farmed fish in which fading of the red color tone of a red muscle and/or an white muscle after processing is delayed. A marine fish is also known to have a pyloric caeca which is an organ protruding from the boundary portion between the stomach and the intestine and which secretes digestive enzymes. The pyloric caeca is usually uneaten and often discarded.

Citation List

Patent Documents

Patent Document 1: JP2009-232864 A

Patent Document 2: JP2018-29616 A

Summary of Invention

Technical Problem

Most of fish meat is a myotomal muscle. The myotomal muscle includes an white muscle and a red muscle. The red muscle differs from the white muscle not only in color tone and taste but also in change with time. Thus, palatability varies depending on proportions of the white muscle and the red muscle contained in fish meat. However, the proportions of the white muscle and the red muscle can be actually grasped by visual observation only after the red muscle is exposed by processing a fish body into a fillet, a loin, a block, or the like, and it is difficult to artificially adjust the proportions. Similarly, the amount of the pyloric caeca can be finally grasped by visual observation after the pyloric caeca is exposed by processing the fish body.
The present disclosure provides an estimation method and an analysis device capable of smoothly estimating the amount of a red muscle of a marine fish without exposing the red muscle. There are provided an estimation method and an analysis device capable of smoothly estimating the amount of a pyloric caeca of a marine fish without exposing the pyloric caeca. There is provided a farming method capable of efficiently providing a marine fish having a high market value flexibly to provide products that meet consumer preferences. There is provided a method for producing a processed product of a marine fish, capable of efficiently providing a processed product of a marine fish having a high market value flexibly to provide products that meet consumer preferences. There is provided a processed product group of a marine fish having a sufficiently reduced variation in amount of a red muscle or a pyloric caeca and a high market value. There is provided an identified product of a marine fish having a high market value.

Solution to Problem

One aspect of the present disclosure provides a method for estimating an amount of a red muscle, the method comprising: an information acquisition step of acquiring information on a red muscle in a fish body of a marine fish by non-destructive inspection; and an estimation step of estimating an amount of the red muscle included in the fish body based on the information.
In the estimation method, the amount of the red muscle is estimated based on the information on the red muscle acquired by the non-destructive inspection. Thus, the amount of the red muscle of the marine fish can be smoothly estimated without exposing the red muscle. For example, it is possible to estimate an amount of a red muscle of a marine fish in a living state. When this estimation method is used for, for example, farming of a marine fish, a marine fish having a high market value can be efficiently provided to provide products that meet consumer preferences.

One aspect of the present disclosure provides a method for producing a processed product of a marine fish, the method comprising a step of processing a marine fish in which an amount of a red muscle is estimated by the above estimation method.

In the above production method, the marine fish in which the amount of a red muscle is estimated by the above estimation method is processed, and thus, it is possible to efficiently provide a processed product of a marine fish having a high market value flexibly to provide products that meet consumer preferences.

One aspect of the present disclosure provides a method for farming a marine fish, the method comprising using an estimated value of an amount of a red muscle contained in a fish body of a marine fish as an index in any step of a farming process.

In the above farming method, it is possible to selectively obtain a farmed fish with a small amount of a red muscle by selecting breeding based on the estimated value of the amount of the red muscle, for example. This makes it possible to efficiently provide a marine fish having a high market value.

One aspect of the present disclosure provides an analysis device comprising: a non-destructive inspection unit that acquires information on a red muscle of a fish body of a marine fish by non-destructive inspection; and a red muscle estimation unit that estimates an amount of the red muscle of the fish body based on the information.

The analysis device estimates the amount of the red muscle based on the information on the red muscle acquired by the non-destructive inspection. This makes it possible to smoothly estimate the amount of the red muscle of the marine fish without exposing the red muscle. For example, it is possible to estimate an amount of a red muscle of a marine fish in a living state. When this analysis device is used for, for example, farming of a marine fish, a marine fish having a high market value can be efficiently provided to provide products that meet consumer preferences.

One aspect of the present disclosure provides an identified product of a marine fish comprising: a fish body or a processed product of a marine fish; and an identification portion including information indicating that an amount of a red muscle contained in the fish body or the processed product has been estimated by non-destructive inspection.

The identified product has the identification portion including the information indicating that the amount of the red muscle contained in the fish body or the processed product of the marine fish has been estimated. This makes it possible for a demand side or a consumer to select a fish body based on the information. Such an identified product has a high market value.

One aspect of the present disclosure provides a processed product group of a marine fish, comprising a plurality of processed products of a marine fish, wherein a standard deviation of weight ratios of red muscles included in the plurality of processed products is 1.5 wt.% or less. In such a processed product group of a marine fish, variation in weight of the red muscle is sufficiently reduced. Thus, the processed product group has high quality reliability and a high market value.

One aspect of the present disclosure provides a processed product group of a marine fish obtained by processing a first marine fish that is a part of a marine fish, the first marine fish being sorted in the step of selecting a marine fish in the above-described farming method. In such a processed product group of a marine fish, the variation in amount of the red muscle is sufficiently reduced. Accordingly, the processed product group of a marine fish has high quality reliability and can meet the market need of a high or low amount of red muscle tissue, thereby having a high market value.

One aspect of the present disclosure provides a method for estimating an amount of a pyloric caeca, the method comprising: an information acquisition step of acquiring information on a pyloric caeca in a fish body of a marine fish by non-destructive inspection; and an estimation step of estimating an amount of the pyloric caeca contained in the fish body based on the information.

In the estimation method, the amount of the pyloric caeca is estimated based on the information on the pyloric caeca acquired by the non-destructive inspection. This makes it possible to smoothly estimate the amount of a pyloric caeca of a marine fish without exposing the pyloric caeca. For example, it is possible to estimate an amount of a pyloric caeca of a marine fish in a living state. When this estimation method is used for, for example, farming of a marine fish, it is possible to efficiently provide a marine fish having a high market value to provide products that meet consumer preferences.

One aspect of the present disclosure provides a method for producing a processed product of a marine fish, the method comprising a step of processing a marine fish in which an amount of a pyloric caeca has been estimated by the above estimation method.

In the above production method, the marine fish in which the amount of the pyloric caeca has been estimated by the above estimation method is processed, and thus, it is possible to efficiently provide a processed product of a marine fish having a high market value flexibly to provide products that meet consumer preferences.

One aspect of the present disclosure provides a method for farming a marine fish, the method comprising using an estimated value of an amount of a pyloric caeca contained in a fish body of a marine fish as an index in any step of a farming process.

In the above farming method, for example, it is possible to selectively obtain a farmed fish having a small amount of a pyloric caeca by selecting breeding based on the estimated value of the amount of the pyloric caeca. This makes it possible to efficiently provide a marine fish having a high market value.

One aspect of the present disclosure provides an analysis device comprising: a non-destructive inspection unit that acquires information on a pyloric caeca in a fish body of a marine fish by non-destructive inspection; and a pyloric caeca estimation unit that estimates an amount of the pyloric caeca included in the fish body based on the information.

The analysis device estimates the amount of the pyloric caeca based on the information on the pyloric caeca acquired by the non-destructive inspection. This makes it possible to smoothly estimate an amount of a pyloric caeca of a marine fish without exposing the pyloric caeca. For example, it is possible to estimate an amount of a pyloric caeca of a marine fish in a living state. When this analysis device is used for, for example, farming of a marine fish, it is possible to efficiently provide a marine fish having a high market value to provide products that meet consumer preferences.

One aspect of the present disclosure provides an identified product of a marine fish, comprising: a fish body or a processed product of a marine fish; and an identification portion including information indicating that an amount of a pyloric caeca contained in the fish body or the processed product has been estimated by non-destructive inspection.

The identified product has the identification portion including the information indicating that the amount of the pyloric caeca contained in the fish body or the processed product of the marine fish has been estimated. This makes it possible for a demand side or a consumer to select a fish body based on the information. Such an identified product has a high market value.

One aspect of the present disclosure provides a processed product group of a marine fish, comprising a plurality of processed products of a marine fish, wherein a standard deviation of weight ratios of pyloric caeca contained in the plurality of processed products is 10.0 wt.% or less. In such a processed product group of a marine fish, the variation in weight of the pyloric caeca is sufficiently reduced. Accordingly, the processed product group has high quality reliability and a high market value.

One aspect of the present disclosure provides a processed product group of a marine fish obtained by processing a first marine fish that is a part of a marine fish, the first marine fish being sorted in the step of selecting a marine fish in the above-described farming method. In such a processed product group of a marine fish, the variation in amount of the pyloric caeca is sufficiently reduced. Accordingly, quality reliability is high, and the yield can be increased, and thus the processed product group has a high market value. Advantageous Effects of Invention

The present disclosure can provide an estimation method and an analysis device capable of smoothly estimating an amount of a red muscle of a marine fish without exposing the red muscle. It is possible to provide an estimation method and an analysis device capable of smoothly estimating an amount of a pyloric caeca of a marine fish without exposing the pyloric caeca. It is possible to provide a method for farming a marine fish, the method being capable of efficiently providing a marine fish having a high market value flexibly to provide products that meet consumer preferences. It is possible to provide a method for producing a processed product of a marine fish, the method being capable of efficiently providing a processed product of a marine fish having a high market value flexibly to provide products that meet consumer preferences. It is possible to provide a processed product group of a marine fish having sufficiently reduced variation in amount of a red muscle and having a high market value. It is possible to provide a processed product group of a marine fish having sufficiently reduced variation in amount of a pyloric caeca and having a high market value. It is possible to provide an identified product of a marine fish having a high market value.

Brief Description of Drawing

FIG. 1 is a diagram illustrating an example of an analysis device.
FIG. 2 is a diagram schematically illustrating a measurement site of a fish body to which a probe is applied.
FIG. 3 is a diagram illustrating an example of an identified product of a marine fish.
FIG. 4(A) is a graph showing a relationship between a cross-sectional area of a red muscle and a weight of the red muscle in a pelvic fin beginning portion. FIG. 4(B) is a graph showing a relationship between a cross-sectional area of a red muscle and a weight of the red muscle in a second dorsal fin beginning portion. FIG. 4(C) is a graph showing a relationship between a cross-sectional area of a red muscle and a weight of the red muscle in an anus.
FIG. 5(A) provides a transverse section echo image and a photograph of a cut surface in the vicinity of a dorsal fin root, and FIG. 5(B) provides a transverse section echo image and a photograph of a cut surface in the vicinity of an anus.
FIGS. 6(A) and 6(B) are graphs showing a relationship between a cross-sectional area of a red muscle determined from the transverse section echo image and a weight of the red muscle actually measured.

Description of Embodiments

Hereinafter, embodiments of the present disclosure will be described, sometimes with reference to the drawings. However, the following embodiments are examples for describing the present disclosure, and are not intended to limit the present disclosure to the following contents. In the description, the same elements or elements having the same function are denoted by the same reference numerals, and redundant description may be omitted. Unless otherwise specified, positional relationships such as up, down, left, and right are based on positional relationships when directions of the reference numerals shown in the drawings are used as references. The dimensional ratios of the respective elements are not limited to the ratios shown in the drawings. In the present embodiments, a numerical range indicated by "to" includes numerical values indicated as the upper limit and the lower limit. In addition, numerical ranges in which the upper limit and the lower limit of a numerical range are replaced with values of Examples are also included in the present disclosure. In a case where a plurality of numerical ranges are exemplified in a stepwise manner, a numerical range in which an upper limit value or a lower limit value in a first numerical range is replaced with an upper limit value or a lower limit value in a second numerical range narrower than the first numerical range is also included in the present disclosure. Substances and materials exemplified in plural numbers may be used alone or in combination of two or more kinds arbitrarily selected.

Method for Estimating Amount of Red Muscle

A method for estimating an amount of a red muscle according to an embodiment includes: an information acquisition step of acquiring information (first information) on a red muscle in a fish body of a marine fish by non-destructive inspection; and an estimation step of estimating an amount of the red muscle contained in the fish body based on the first information.

In the present specification, fish species of the marine fish are not particularly limited. Examples of fish species in which a color tone of the red muscle has a large influence on a commodity value include a marine fish belonging to the order Perciformes. For example, a marine fish belonging to the family Scombridae or the family Carangidae is exemplified as the marine fish belonging to the order Perciformes, in which the color tone of the red muscle has a large influence on the commodity value. Examples of fish species in which the amount of the red muscle has a particularly large influence on the commodity value include marine fish belonging to the genus Thunnus, the genus Katsuwonus, the genus Euthynnus, and the genus Auxis of the family Scombridae, and the genus Seriola, the genus Trachurus, the genus Decapterus, the genus Pseudocaranx, the genus Megalaspis cordyla, and the genus Caranx ignobilis of the family Carangidae. The marine fish may include, as a fish suitable for farming, at least one selected from the group consisting of yellowtail (Seriola quinqueradiata), great amberjack (Seriola dumerili), yellowtail amberjack (Seriola lalandi), white trevally (Pseudocaranx dentex), bluefin tuna (Thunnus orientalis), Atlantic bluefin tuna (Thunnus thynnus), and southern bluefin tuna (Thunnus maccoyii). In a case of a farmed fish, the amount of a red muscle can be easily adjusted in a rearing environment by measuring the amount of the red muscle in a non-destructive manner.

The non-destructive inspection in the present specification is a method of inspecting a fish body without destroying the fish body, and can be performed using a commercially available non-destructive inspection device. As the non-destructive inspection, at least one selected from the group consisting of ultrasonic inspection, MRI inspection, and CT inspection may be used. Among these, from the viewpoint of workability and convenience in a farm, ultrasonic inspection may be used.

The fish body may be alive or need not be alive. When a living fish body is used, the estimation result of the red muscle can be used for follow-up observation of a farmed fish, selection of breeding, and the like. This makes it possible to preferentially farm or breed a fish body with a small amount of a red muscle, for example.

In acquiring the first information, a living fish body may be immobilized using anesthesia. This makes it possible to smoothly acquire the information on the red muscle. In addition, the amount of the red muscle can be estimated with higher accuracy. The anesthesia method is not particularly limited as described below. However, it is not essential to apply anesthesia, and for example, information on the red muscle of a fish body that is migratory in a water tank may be acquired using a non-destructive inspection device provided inside or around the water tank.

The first information may be acquired by observing the red muscle from an image of a fish body of a marine fish, or may be acquired by estimating an amount of an white muscle from the image and subtracting the estimated amount of the white muscle from the entire muscles.

The first information may be a three-dimensional image or a two-dimensional image. The two-dimensional image is preferable because it can be acquired more easily and quickly than the three-dimensional image. The first information may include a cross-sectional image of the fish body, and may include a cross-sectional area of the red muscle determined from the cross-sectional image. The cross-sectional image may include a longitudinal section image of the fish body or may include a transverse section image thereof. In the present specification, a transverse section refers to a cross-section orthogonal to a direction in which a spine extends, and a longitudinal section refers to a cross-section parallel to the direction in which the spine extends. From the viewpoint of the size of a detector such as a probe used for measurement, the cross-sectional image may be a transverse section image of the fish body. The cross-sectional image may include a transverse section image between the fourth vertebra and the twenty-second vertebra, between the second dorsal fin beginning portion and the vicinity of the anus, or between the second dorsal fin beginning portion and the anal fin beginning portion, of a marine fish. This makes it possible to estimate the amount of the red muscle with high accuracy. The cross-sectional image may include a transverse section image between the eleventh vertebra to the seventeenth vertebra of the marine fish. This makes it possible to estimate the amount of the red muscle with higher accuracy. From the viewpoint of estimating the amount of the red muscle with higher accuracy, the cross-sectional image may include a transverse section image passing through the anus of the fish body. That is, the cross-sectional image may include a transverse section image containing at least a portion of the anus of the fish body.

The cross-sectional area of the red muscle included in the first information may be determined from the cross-sectional image using image processing software, or may be determined using a measurement function provided in the non-destructive inspection device. Alternatively, an operator may calculate the length or the cross-sectional area using a cross-sectional image displayed on the monitor or a printed photograph. When the first information includes the cross-sectional area of the red muscle determined from the cross-sectional image, it is possible to estimate the amount of the red muscle with high accuracy.

In the estimation step, the amount of the red muscle is estimated based on the first information. The amount of the red muscle estimated in the estimation step may be a weight of the red muscle or a volume of the red muscle. A relationship (correlation equation) between the cross-sectional area of the red muscle and the amount of the red muscle may vary depending on the weight of the fish body. Accordingly, a weight measurement step of measuring the weight of the fish body may be performed before the information acquisition step or between the information acquisition step and the estimation step. This makes it possible to select a correlation equation depending on the weight of the fish body. Thus, the amount of the red muscle can be estimated with higher accuracy.

Statistical data or a machine learning model may be used to estimate the amount of the red muscle in the estimation step. The statistical data may include, for example, a correlation equation obtained by performing statistical processing of the cross-sectional area of the red muscle and the weight of the red muscle included in the fish body that is actually measured. Such a correlation equation can be obtained by performing statistical processing of the cross-sectional area of the red muscle included in the fish body and the weight of the red muscle that is actually measured. The weight of the red muscle can be measured by, for example, removing vertebrae from a meat mass after fillet processing, and dividing the resulting meat mass into the red muscle and the white muscle. Such a correlation equation may be prepared for each weight of the fish body. The relationship between the first information and the amount of the red muscle may vary depending on fish species. Thus, prediction accuracy can be improved by preparing statistical data for each fish species. The white muscle may be used for estimating the amount of red muscle tissue, similarly to the red muscle. On the other hand, the weight of the white muscle is different from that of the red muscle, and may vary depending on the degree of processing of the product in terms of how far the head is included during fillet processing and the high possibility that the white muscle is also removed together during trimming of the abdominal bone and the like. Thus, it is preferable to use the red muscle rather than the white muscle for estimating the amount of red muscle tissue.

The machine learning model may be constructed using, for example, the cross-sectional area of the red muscle included in the fish body, and the weight of the fish body and the weight of the red muscle that are actually measured as training data. In this case as well, the training data may be prepared for each fish species for learning. The machine learning model may have an algorithm for increasing prediction accuracy based on deviation between a predicted value and an actual value of the amount of the red muscle.

In the estimation method, the amount such as the weight and/or the volume of the red muscle is estimated based on the information on the red muscle acquired by the non-destructive inspection. Thus, the amount of a red muscle of a marine fish can be smoothly estimated without exposing the red muscle. For example, it is possible to estimate an amount of a red muscle of a marine fish in a living state. Until now, there has been no method for evaluating a red muscle by non-destruction, and thus, the red muscle has been directly collected and the amount thereof has been measured. However, with such a method, a marine fish cannot be kept alive. Accordingly, when the above estimation method is applied to, for example, farming of a marine fish, a marine fish having a high market value can be efficiently grown to provide products that meet consumer preferences. This estimation method may be performed using an analysis device to be described below. Thus, the following description of the analysis device also applies to this estimation method. Moreover, the description of the estimation method described above also applies to the analysis device, a farming method, a method for producing a processed product of a marine fish, an identified product of a marine fish, and a processed product group of a marine fish below.

Method for Estimating Amount of Pyloric caeca

A method for estimating an amount of a pyloric caeca according to an embodiment includes: an information acquisition step of acquiring information (third information) on a pyloric caeca in a fish body of a marine fish by non-destructive inspection; and an estimation step of estimating an amount of the pyloric caeca contained in the fish body based on the third information.

In the present specification, fish species of the marine fish are not particularly limited. Examples of a fish species in which the pyloric caeca has a large influence on a commodity value by a yield include a marine fish belonging to the order Perciformes. For example, a marine fish belonging to the family Scombridae or the family Carangidae is exemplified as the marine fish belonging to the order Perciformes, in which the pyloric caeca has an influence on a commodity value by a yield. Examples of fish species in which the amount of the pyloric caeca has a particularly large influence on the commodity value include marine fish belonging to the genus Thunnus, the genus Katsuwonus, the genus Euthynnus, and the genus Auxis of the family Scombridae, and the genus Seriola, the genus Trachurus, the genus Decapterus, the genus Pseudocaranx, the genus Megalaspis cordyla, and the genus Caranx ignobilis of the family Carangidae. The marine fish may include, as a fish suitable for farming, at least one selected from the group consisting of yellowtail (Seriola quinqueradiata), great amberjack (Seriola dumerili), yellowtail amberjack (Seriola lalandi), white trevally (Pseudocaranx dentex), bluefin tuna (Thunnus orientalis), Atlantic bluefin tuna (Thunnus thynnus), and southern bluefin tuna (Thunnus maccoyii). In a case of a farmed fish, the evaluation may be important because the farmed fish is often fed with a formula feed and may develop the pyloric caeca.

The non-destructive inspection in the present specification is a method of inspecting a fish body without destroying the fish body, and can be performed using a commercially available non-destructive inspection device. As the non-destructive inspection, at least one selected from the group consisting of ultrasonic inspection, MRI inspection, and CT inspection may be used. Among these, from the viewpoint of workability and convenience in a farm, ultrasonic inspection may be used.

The fish body may be alive or need not be alive. When a living fish body is used, the estimation result of the pyloric caeca can be used for follow-up observation of a farmed fish, selection of breeding, and the like. This makes it possible to preferentially farm or breed a fish body with a small amount of a pyloric caeca, for example.

In acquiring the third information, a living fish body may be immobilized using anesthesia. This makes it possible to smoothly acquire the information on the pyloric caeca. In addition, the amount of the pyloric caeca can be estimated with higher accuracy. The anesthesia method is not particularly limited as described below. However, it is not essential to apply anesthesia, and for example, information on the pyloric caeca of a fish body that is migratory in a water tank may be acquired using a non-destructive inspection device provided inside or around the water tank. In acquiring the third information, a position of a pyloric caeca cross-section at which the pyloric caeca weight can be appropriately evaluated may be specified in advance. When the position is specified, the pyloric caeca weight can be estimated more accurately from the cross-sectional area.

The third information may be a three-dimensional image or a two-dimensional image. The third information may include a cross-sectional image of the fish body, and may include a cross-sectional area of the pyloric caeca determined from the cross-sectional image. The cross-sectional image may include a longitudinal section image of the fish body or may include a transverse section image thereof. In the present specification, a transverse section refers to a cross-section orthogonal to a direction in which a spine extends, and a longitudinal section refers to a cross-section parallel to the direction in which the spine extends. From the viewpoint of the size of a detector such as a probe used for measurement, the cross-sectional image may be a transverse section image of the fish body. The cross-sectional image may include a transverse section image between the second vertebra to the eleventh vertebra of the marine fish. This makes it possible to estimate the amount of the pyloric caeca with high accuracy. The cross-sectional image may include a transverse section image between the fourth vertebra to the ninth vertebra of the marine fish or in the vicinity of a pelvic fin root. This makes it possible to estimate the amount of the pyloric caeca with higher accuracy. From the viewpoint of estimating the amount of the pyloric caeca with higher accuracy, the cross-sectional image may include a transverse section image at the pelvic fin root of the fish body. That is, the cross-sectional image may include a transverse section image containing at least a portion of the pelvic fin root of the fish body.

The cross-sectional area of the pyloric caeca included in the third information may be determined from the cross-sectional image using image processing software, or may be determined using a measurement function provided in the non-destructive inspection device. Alternatively, an operator may calculate the length or the cross-sectional area using a cross-sectional image displayed on the monitor or a printed photograph. When the third information includes the cross-sectional area of the pyloric caeca determined from the cross-sectional image, it is possible to estimate the amount of the pyloric caeca with high accuracy.

In the estimation step, the amount of the pyloric caeca is estimated based on the third information. The amount of the pyloric caeca estimated in the estimation step may be a weight of the pyloric caeca or a volume of the pyloric caeca. A relationship (correlation equation) between the cross-sectional area of the pyloric caeca and the amount of the pyloric caeca may vary depending on the weight of the fish body. Accordingly, a weight measurement step of measuring the weight of the fish body may be performed before the information acquisition step or between the information acquisition step and the estimation step. This makes it possible to select a correlation equation depending on the weight of the fish body. Thus, the amount of the pyloric caeca can be estimated with higher accuracy.

Statistical data or a machine learning model may be used to estimate the amount of the pyloric caeca in the estimation step. The statistical data may include, for example, a correlation equation obtained by performing statistical processing of the cross-sectional area of the pyloric caeca and the weight of the pyloric caeca contained in the fish body that is actually measured. Such a correlation equation can be obtained by performing statistical processing of the cross-sectional area of the pyloric caeca contained in the fish body and the weight of the pyloric caeca that is actually measured. Such a correlation equation may be prepared for each weight of the fish body. The relationship between the third information and the amount of the pyloric caeca may vary depending on fish species. Thus, prediction accuracy can be improved by preparing statistical data for each fish species.

The machine learning model may be constructed using, for example, the cross-sectional area of a pyloric caeca contained in a fish body, and the weight of the fish body and the weight of the pyloric caeca that are actually measured, as training data. In this case as well, the training data may be prepared for each fish species for learning. The machine learning model may have an algorithm for increasing the prediction accuracy based on deviation between a predicted value and an actual value of the amount of the pyloric caeca.

In the estimation method, the amount such as the weight and/or the volume of the pyloric caeca is estimated based on the information of the pyloric caeca acquired by the non-destructive inspection. Thus, the amount of a pyloric caeca of a marine fish can be smoothly estimated without exposing the pyloric caeca. For example, it is possible to estimate an amount of a pyloric caeca of a marine fish in a living state. Until now, there has been no method for evaluating a pyloric caeca by non-destruction, and thus, the pyloric caeca has been directly collected and the amount thereof has been measured. However, with such a method, a marine fish cannot be kept alive. Accordingly, when the above estimation method is applied to, for example, farming of a marine fish, a marine fish having a high market value can be efficiently grown to provide products that meet consumer preferences. This estimation method may be performed using an analysis device to be described below. Thus, the following description of the analysis device also applies to this estimation method. Moreover, the description of the estimation method described above also applies to the analysis device, a farming method, a method for producing a processed product of a marine fish, an identified product of a marine fish, and a processed product group of a marine fish below.

Analysis Device for Red Muscle

An analysis device for a red muscle according to an embodiment includes: a non-destructive inspection unit that acquires first information on a red muscle in a fish body of a marine fish by non-destructive inspection; and a red muscle estimation unit that estimates an amount of the red muscle contained in the fish body based on the first information. The analysis device is a device capable of analyzing a fish body without destroying the fish body during inspection. The non-destructive inspection unit may include at least one selected from the group consisting of an ultrasonic inspection unit, an MRI inspection unit, and a CT inspection unit. As each inspection unit, a commercially available inspection unit may be used. The non-destructive inspection unit may include an ultrasonic inspection unit from the viewpoint of workability and convenience in a farm. The ultrasonic inspection unit is inexpensive and small in size, and thus has an advantage of being easily brought into a farm and easily used. However, the non-destructive inspection unit is not limited to the ultrasonic inspection unit, and may be an MRI inspection unit or a CT inspection unit. These have an advantage of being excellent in capturing the entire fish body and being capable of acquiring a clearer image. The non-destructive inspection unit may include a calculation unit that calculates a cross-sectional area of the red muscle from the cross-sectional image of the fish body and outputs the first information including the cross-sectional area. The red muscle estimation unit may include a calculation unit to which the first information is input, the calculation unit performing calculation using statistical data or a machine learning model, and outputting an estimated value of the amount of the red muscle.

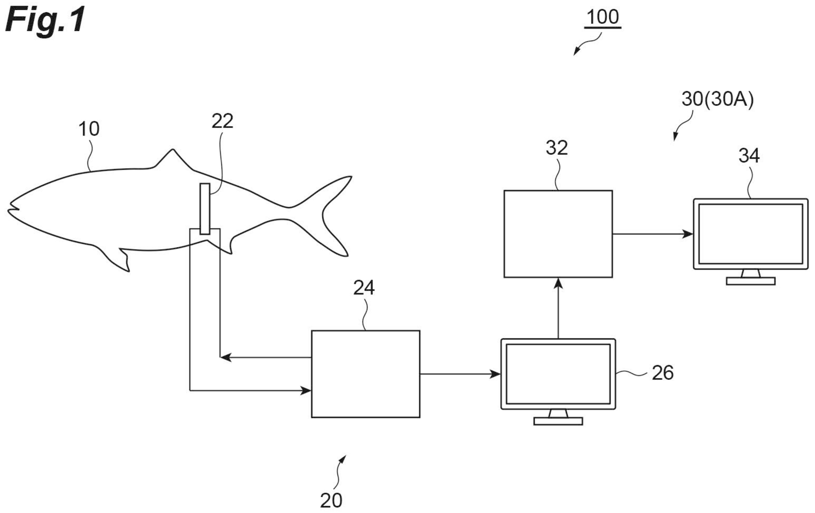

FIG. 1 is a diagram illustrating an example of an analysis device for a red muscle, including an ultrasonic inspection unit. An analysis device 100 includes a non-destructive inspection unit 20 and a red muscle estimation unit 30. The non-destructive inspection unit 20 includes a probe 22 having an ultrasonic transducer that transmits an ultrasonic wave and detects a reflected wave (echo) reflected from a tissue of a fish body 10, a control unit 24 that exchanges signals with the probe 22 and outputs an image signal to be displayed on a first display unit 26, and the first display unit 26 on which a cross-sectional image (echo image) is displayed based on the image signal.

The probe 22 is applied to a measurement site of the fish body 10 to detect a reflected wave. An operator may calculate a length or a cross-sectional area of the cross-section of the red muscle using the cross-sectional image of the fish body 10 displayed on the first display unit 26 or a printed photograph. Alternatively, the control unit 24 may calculate the length or the cross-sectional area of the cross-section of the red muscle and display the calculated length or the calculated cross-sectional area on the first display unit 26. The control unit 24 may include, for example, a transmission unit that generates an electric pulse signal to be applied to the ultrasonic transducer, a reception unit that receives a reflection signal from the probe 22, a converter that converts the reflection signal received by the reception unit into an image signal, a calculation unit that calculates a cross-sectional area of the red muscle from a cross-sectional image, and the like. The control unit 24 and the first display unit 26 may be configured as separate pieces of hardware or may be integrated. The non-destructive inspection unit 20 may be composed of a commercially available ultrasonic inspection device. The first display unit 26 may be composed of a general monitor.

The red muscle estimation unit 30 includes a calculation unit 32 that calculates an estimated value of the amount of the red muscle based on the first information displayed on the first display unit 26, and a second display unit 34 on which the estimated value calculated by the calculation unit 32 is displayed. The calculation unit 32 receives the first information, performs calculation using statistical data or a machine learning model, and outputs an estimated value of the amount of the red muscle. On the second display unit 34, the estimated value of the amount of the red muscle is displayed. The calculation unit 32 of the red muscle estimation unit 30 may be composed of a general computer, and the second display unit 34 may be composed of a general monitor.

Although the control unit 24 and the calculation unit 32 are illustrated as separate components in FIG. 1, these components may be configured as one piece of hardware or may be configured as separate pieces of hardware. The first display unit 26 and the second display unit 34 may also be separate monitors or may be configured as a single monitor. In the latter case, the display of the cross-sectional image and the display of the estimated value of the amount of the red muscle may be switched, or the cross-sectional image and the estimated value of the amount of the red muscle may be displayed at the same time.

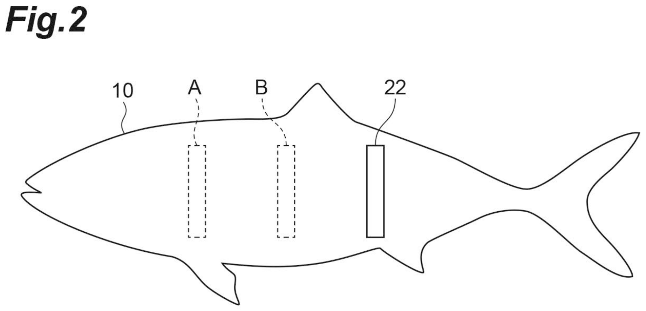

In FIG. 1, the probe 22 is applied to the vicinity of the anus of the fish body 10 to detect a reflected wave. The transverse section image of the vicinity of the anus includes a part of a transverse section obtained by cutting the fish body 10 to pass through the anus or a position shifted from the anus by 0 to 5% of the entire length of the fish body 10 along the length direction of the fish body 10. The measurement site to which the probe 22 is applied is not limited to the vicinity of the anus. As illustrated in FIG. 2, the probe 22 may be moved to the front of the fish body 10 and placed at a position A to obtain a cross-sectional image of a pelvic fin beginning portion of the fish body 10. The probe 22 may be placed at a position B to obtain a cross-sectional image of a second dorsal fin beginning portion.

Although the ultrasonic inspection unit is illustrated in the example of FIG. 1, the non-destructive inspection unit 20 may include an MRI inspection unit or a CT inspection unit instead of the ultrasonic inspection unit. For example, when the non-destructive inspection unit 20 includes an MRI inspection unit, the non-destructive inspection unit 20 may include a superconducting magnet that generates a magnetic field, a transmission unit (high-frequency coil) that transmits an electric wave, a gradient magnetic field coil unit that changes the magnetic field, a reception unit (reception coil) that receives an electric wave from the inside of the fish body, and the like. The MRI inspection unit can obtain a cross-sectional image of the fish body by using magnetism, an electromagnetic wave, and movement of a hydrogen atom. In a case where the non-destructive inspection unit 20 includes a CT inspection unit, the CT inspection unit may include an X-ray tube that irradiates the fish body with X-rays, a detector that detects an X-ray that has passed through the fish body, and a drive unit that rotationally drives the X-ray tube and the detector. As the MRI inspection unit and the CT inspection unit, a commercially available MRI inspection device and a commercially available CT inspection device can be used.

The analysis device 100 estimates the amount of the red muscle based on the first information of the red muscle acquired by the non-destructive inspection. Thus, an amount of a red muscle of a marine fish can be smoothly estimated without exposing the red muscle. For example, it is possible to estimate an amount of a red muscle of a marine fish in a living state. Anesthesia may be applied to the marine fish prior to the non-destructive inspection. By applying anesthesia, an image can be stably acquired in the non-destructive inspection. When the marine fish is returned to seawater immediately after the non-destructive inspection, the marine fish can be awakened from anesthesia. The anesthesia method is not particularly limited as long as the method can fix the fish body for a certain period of time and acquire a stable image by the non-destructive inspection. For example, a marine fish may be immobilized by anesthesia with an anesthetic such as 2-phenoxyethanol or eugenol, or by shock with electric shock, a sound, or a vibration. When the analysis device 100 is used for, for example, farming of a marine fish, it is possible to efficiently provide a marine fish having a high market value to provide products that meet consumer preferences. Accordingly, the description of the analysis device described above also applies to the description of the farming method below.

Analysis Device for Pyloric caeca

An analysis device for a pyloric caeca according to an embodiment includes: a non-destructive inspection unit that acquires third information on a pyloric caeca in a fish body of a marine fish by non-destructive inspection; and a pyloric caeca estimation unit that estimates an amount of the pyloric caeca contained in the fish body based on the third information. The analysis device is a device capable of analyzing a fish body without destroying the fish body during inspection. The non-destructive inspection unit may include at least one selected from the group consisting of an ultrasonic inspection unit, an MRI inspection unit, and a CT inspection unit. As each inspection unit, a commercially available inspection unit may be used. The non-destructive inspection unit may include an ultrasonic inspection unit from the viewpoint of workability and convenience in a farm. The ultrasonic inspection unit is inexpensive and small in size, and thus has an advantage of being easily brought into a farm and easily used. However, the non-destructive inspection unit is not limited to the ultrasonic inspection unit, and may be an MRI inspection unit or a CT inspection unit. These have an advantage of being excellent in capturing the entire fish body and being capable of acquiring a clearer image. The non-destructive inspection unit may include a calculation unit that calculates a cross-sectional area of the pyloric caeca from the cross-sectional image of the fish body and outputs the third information including the cross-sectional area. The pyloric caeca estimation unit may include a calculation unit to which the third information is input, the calculation unit performing calculation using statistical data or a machine learning model, and outputting an estimated value of the amount of the pyloric caeca.

FIG. 1 is a diagram illustrating an example of an analysis device for a pyloric caeca including an ultrasonic inspection unit. An analysis device 100 includes a non-destructive inspection unit 20 and a pyloric caeca estimation unit 30A. The non-destructive inspection unit 20 includes a probe 22 having an ultrasonic transducer that transmits an ultrasonic wave and detects a reflected wave (echo) reflected from a tissue of a fish body 10, a control unit 24 that exchanges signals with the probe 22 and outputs an image signal to be displayed on a first display unit 26, and the first display unit 26 on which a cross-sectional image (echo image) is displayed based on the image signal.

As illustrated in FIG. 2, the probe 22 is applied to a measurement site of the fish body 10 to detect a reflected wave. An operator may calculate a length or a cross-sectional area of the cross-section of the pyloric caeca using the cross-sectional image of the fish body 10 displayed on the first display unit 26 in FIG. 1 or a printed photograph. Alternatively, the control unit 24 may calculate the length or the cross-sectional area of the cross-section of the pyloric caeca and display the calculated length or the calculated cross-sectional area on the first display unit. The control unit 24 may include, for example, a transmission unit that generates an electric pulse signal to be applied to the ultrasonic transducer, a reception unit that receives a reflection signal from the probe 22, a converter that converts the reflection signal received by the reception unit into an image signal, a calculation unit that calculates the cross-sectional area of the pyloric caeca from a cross-sectional image, and the like. The control unit 24 and the first display unit 26 may be configured as separate pieces of hardware or may be integrated. The non-destructive inspection unit 20 may be composed of a commercially available ultrasonic inspection device. The first display unit 26 may be composed of a general monitor.

The pyloric caeca estimation unit 30A includes a calculation unit 32 that calculates an estimated value of the amount of the pyloric caeca based on the third information displayed on the first display unit 26, and a second display unit 34 on which the estimated value calculated by the calculation unit 32 is displayed. The calculation unit 32 receives the third information, performs calculation using statistical data or a machine learning model, and outputs an estimated value of the amount of the pyloric caeca. On the second display unit 34, the estimated value of the amount of the pyloric caeca is displayed. The calculation unit 32 of the pyloric caeca estimation unit 30A may be composed of a general computer, and the second display unit 34 may be composed of a general monitor.

Although the control unit 24 and the calculation unit 32 are illustrated as separate components in FIG. 1, these components may be configured as one piece of hardware or may be configured as separate pieces of hardware. The first display unit 26 and the second display unit 34 may also be separate monitors or may be configured as a single monitor. In the latter case, the display of the cross-sectional image and the display of the estimated value of the amount of the pyloric caeca may be switched, or the cross-sectional image and the estimated value of the amount of the pyloric caeca may be displayed at the same time.

Although the ultrasonic inspection unit is exemplified in the example of FIG. 1, the non-destructive inspection unit 20 may include an MRI inspection unit or a CT inspection unit instead of the ultrasonic inspection unit. For example, in a case where the non-destructive inspection unit 20 includes an MRI inspection unit, the non-destructive inspection unit 20 may include a superconducting magnet that generates a magnetic field, a transmission unit (high-frequency coil) that transmits an electric wave, a gradient magnetic field coil unit that changes the magnetic field, a reception unit (reception coil) that receives an electric wave from the inside of the fish body, and the like. The MRI inspection unit can obtain a cross-sectional image of the fish body by using magnetism, an electromagnetic wave, and movement of a hydrogen atom. In a case where the non-destructive inspection unit 20 includes a CT inspection unit, the CT inspection unit may include an X-ray tube that irradiates the fish body with X-rays, a detector that detects an X-ray that has passed through the fish body, and a drive unit that rotationally drives the X-ray tube and the detector. As the MRI inspection unit and the CT inspection unit, a commercially available MRI inspection device and a commercially available CT inspection device can be used.

The analysis device 100 estimates the amount of the pyloric caeca based on the third information on the pyloric caeca acquired by the non-destructive inspection. Thus, an amount of a pyloric caeca of a marine fish can be smoothly estimated without exposing the pyloric caeca. For example, it is possible to estimate an amount of a pyloric caeca of a marine fish in a living state. Anesthesia may be applied to the marine fish prior to the non-destructive inspection. By applying anesthesia, an image can be stably acquired by the non-destructive inspection. When the marine fish is returned to seawater immediately after the non-destructive inspection, the marine fish can be awakened from anesthesia. The anesthesia method is not particularly limited as long as the method can fix the fish body for a certain period of time and acquire a stable image by the non-destructive inspection. For example, a marine fish may be immobilized by anesthesia with an anesthetic such as 2-phenoxyethanol or eugenol, or by shock with electric shock, a sound, or a vibration. When the analysis device 100 is used for, for example, farming of a marine fish, it is possible to efficiently provide a marine fish having a high market value to provide products that meet consumer preferences. Accordingly, the description of the analysis device described above also applies to the description of the farming method below.

Farming Method

In a method for farming a marine fish according to a first embodiment, an estimated value of an amount of a red muscle contained in a fish body of a marine fish is used as an index in any step of a farming process. The farming process includes a process from hatching to shipping of an adult fish. The estimated value of the amount of the red muscle may be used as an index for sorting a farmed fish (marine fish). That is, the farming method may include a step of sorting the farmed fish based on the estimated value of the amount of the red muscle.

For example, the amount of the red muscle may be estimated at any stage of larva, juvenile, and adult, and the farmed fish (marine fish) may be sorted based on the estimated value. For example, the farmed fish may be sorted into a first group (first marine fish) having a low proportion of the red muscle and a second group (second marine fish) having a higher proportion of the red muscle than that of the first group. Thereafter, when only the first group is continuously farmed, a farmed fish having a lower proportion of the red muscle than that of a general farmed fish can be obtained. In addition, when such sorting is performed a plurality of times at predetermined intervals, it is possible to obtain a farmed fish having a sufficiently lower proportion of the red muscle than that of a general farmed fish. The number of groups to be sorted is not limited to two, and may be three or more. A processed product group of a marine fish obtained through the step of sorting a farmed fish described above can sufficiently reduce the variation in amount of the red muscle. In addition, the amount of the red muscle can be reduced. Such a processed product group of a marine fish has a high market value.

The farming method may include a step of selecting breeding from among the farmed fish based on the estimated value of the amount of the red muscle. When breeding having the lowest proportion of the red muscle is selected from among the farmed fish, the amount of the red muscle of the farmed fish of the next generation can be reduced. This makes it possible to efficiently provide a marine fish having a high market value. This breeding of the farming method may be repeated for multiple generations to create a group of farmed fish with a desired range of the amount of the red muscle. Whether or not a group is created by such breeding can be determined by sampling about 10 individuals from the group and measuring the amount of the red muscle.

The amount of the red muscle contained in the fish body of the farmed fish may be estimated by the "Method for Estimating Amount of Red Muscle" described above. The "Analysis Device for Red Muscle" described above may be used for this estimation. Thus, the descriptions of the "Method for Estimating Amount of Red Muscle" and the "Analysis Device for Red Muscle" also apply to this farming method.

In a method for farming a marine fish according to a second embodiment, an estimated value of an amount of a pyloric caeca contained in a fish body of a marine fish is used as an index in any step of a farming process. The farming process includes a process from hatching to shipping of an adult fish. The estimated value of the amount of the pyloric caeca may be used as an index for sorting a farmed fish (marine fish). That is, the farming method may include a step of sorting a farmed fish based on the estimated value of the amount of the pyloric caeca.

For example, the amount of the pyloric caeca may be estimated at any stage of larva, juvenile, or adult, and the farmed fish (marine fish) may be sorted based on the estimated value. For example, the farmed fish may be sorted into a first group (first marine fish) having a low proportion of the pyloric caeca and a second group (second marine fish) having a higher proportion of the pyloric caeca than that of the first group. Thereafter, when only the first group is continuously farmed, it is possible to obtain a farmed fish having a lower proportion of the pyloric caeca than that of a general farmed fish. In addition, when such sorting is performed a plurality of times at predetermined intervals, it is possible to obtain a farmed fish having a sufficiently lower proportion of the pyloric caeca than that of a general farmed fish. The number of groups to be sorted is not limited to two, and may be three or more. A processed product group of a marine fish obtained through the step of sorting a farmed fish described above can sufficiently reduce the variation in amount of the pyloric caeca. It is also possible to reduce the amount of the pyloric caeca. Such a processed product group of a marine fish has a high market value.

The farming method may include a step of selecting breeding from among the farmed fish based on the estimated value of the amount of the pyloric caeca. When breeding having the lowest proportion of the pyloric caeca is selected from among the farmed fish, the amount of pyloric caeca of the farmed fish of the next generation can be reduced. This makes it possible to efficiently provide a marine fish having a high market value. This breeding of the farming method may be repeated for multiple generations to create a group of farmed fish with a desired range of the amount of the pyloric caeca. Whether or not a group is created by such breeding can be determined by sampling about 10 individuals from the group and measuring the amount of the pyloric caeca.

The amount of the pyloric caeca contained in the fish body of the farmed fish may be estimated by Method for Estimating Amount of Pyloric caeca described above. Analysis Device for Pyloric caeca described above may be used for this estimation. Thus, the descriptions of Method for Estimating Amount of Pyloric caeca and Analysis Device for Pyloric caeca also apply to this farming method.

Method for Producing Processed Product of Marine Fish

A method for producing a processed product of a marine fish according to a first embodiment includes a step of processing a marine fish in which the amount of the red muscle has been estimated by the above-described method for estimating an amount of a red muscle. The marine fish to be processed may be a fish body in a round state or a processed product having a lower degree of processing than GG (Grilled and Gutted). In these cases, the red muscle is not exposed, and thus, it is highly useful to estimate the amount of the red muscle. Here, the "processed product with a low degree of processing" refers to a processed product with a small extent of processing. For example, GG has a lower degree of processing than loin. The processing may include, for example, at least one of dissecting, cutting, and cooking. Examples of the processed product of a marine fish obtained by the step include marine raw materials obtained by dissecting or cutting such as GG, semi-dress, dress, center-cut, fillet, loin, and slice (sashimi). In addition, products obtained by refrigerating, freezing, and/or ripening these products are also included in the processed product of a marine fish. Other examples of the processed product of a marine fish include various processed marine products such as fish meat soaked in a seasoning such as salt, sweet sake, or miso, a paste containing fish meat, canned food, frozen food, and chilled food. The red muscle may not be preferred by some customers because of its color tone. In a market where there are many customers who do not like the red muscle, the red muscle portion may not be processed, and may be removed and discarded depending on the market. Thus, in such a market, a marine fish with a small amount of the red muscle is advantageous in that the yield can be increased. On the other hand, there are also customers who want fish meat containing a lot of the red muscle to show fish meat-like appearance or to obtain a variety of colors.

A method for producing a processed product of a marine fish according to a second embodiment includes a step of processing a marine fish farmed by the first embodiment of the above-described farming method. The processing may include, for example, at least one of dissecting, cutting, and cooking. Examples of the processed product of a marine fish obtained by the step are as described above.

A method for producing a processed product of marine fish according to a third embodiment includes a step of processing a marine fish in which the amount of the pyloric caeca has been estimated by the above-described method for estimating an amount of a pyloric caeca. The marine fish to be processed may be a fish body in a round state or a processed product having a lower degree of processing than GG (Grilled and Gutted). In these cases, the pyloric caeca is not exposed, and thus, it is highly useful to estimate the amount of the pyloric caeca. Here, the "processed product with a low degree of processing" refers to a processed product with a small extent of processing. For example, GG has a lower degree of processing than loin. The processing may include, for example, at least one of dissecting, cutting, and cooking. Examples of the processed product of a marine fish obtained by the step include marine raw materials obtained by dissecting or cutting such as GG, semi-dress, dress, center-cut, fillet, loin, and slice (sashimi). In addition, products obtained by refrigerating, freezing, and/or ripening these products are also included in the processed products of marine fish. Other examples of the processed product of a marine fish include various processed marine products such as fish meat soaked in a seasoning such as salt, sweet sake, or miso, a paste containing fish meat, canned food, frozen food, and chilled food. The pyloric caeca is usually removed and discarded during processing, and thus, a marine fish with a small amount of the pyloric caeca is advantageous in that the yield can be increased.

A method for producing a processed product of a marine fish according to a fourth embodiment includes a step of processing a marine fish farmed by the second embodiment of the farming method described above. The processing may include, for example, at least one of dissecting, cutting, and cooking. Examples of the processed product of a marine fish obtained by the step are as described above.

In the production method according to each of the above embodiments, a marine fish in which the amount of the red muscle or the pyloric caeca has been estimated by the above-described estimation method or farming method is processed, and thus, a processed product of marine fish having a high market value can be efficiently produced flexibly to provide products that meet consumer preferences. For example, a processed marine product having a low proportion of the red muscle and a high proportion of the white muscle can be produced. Alternatively, a processed marine product having a low proportion of the pyloric caeca can be produced.

In the production method according to each of the above embodiments, it is not necessary to sort a marine fish having a small amount of the red muscle or the pyloric caeca after processing. Such an operation is not required, and thus, freshness can be improved. Accordingly, a processed product of a marine fish having a small amount of the red muscle or the pyloric caeca and having high freshness can be obtained. Thus, freshness of a processed product of a marine fish can be maintained sufficiently high. A K value of a processed product of a marine fish is an index indicating the degree of progress of decomposition of ATP (adenosine triphosphate), and is determined by the following equation. In the following equation, IMP represents inosinic acid, HxR represents inosine, Hx represents hypoxanthine, ADP represents adenosine diphosphate, and AMP represents adenosine monophosphate.

$$\text{K value} = (HxR + Hx)/(ATP + ADP + AMP + IMP + HxR + Hx) \times 100$$

The smaller the K value, the smaller the proportion of the total amount of HxR and Hx relative to the total amount of ATP and ATP decomposition-related substances. A small K value means that the decomposition of IMP to HxR or Hx has not sufficiently proceeded, that is, a large amount of ATP decomposition-related substances to IMP remains. The K value may be 35% or less, 30% or less, 20% or less, or 10% or less. The lower limit of the K value may be 1% or 5%. The K value may be, for example, 1 to 35%, 1 to 30%, 1 to 20%, 1 to 10%, 5 to 35%, 5 to 30%, 5 to 20%, or 5 to 10%.

Identified Product of Marine Fish

An identified product of a marine fish according to a first embodiment includes: a fish body or a processed product of a marine fish; and an identification portion including information (second information) indicating that an amount of a red muscle contained in the fish body or the processed product has been estimated by non-destructive inspection. The amount of the red muscle contained in the fish body or the processed product may be estimated by the "Method for Estimating Amount of Red Muscle" described above. The second information may be related to an estimated value of the amount of the red muscle obtained using the "Analysis Device for Red Muscle" described above. The fish body and the processed product of the marine fish may be a farmed fish obtained by the first embodiment of the farming method described above. Thus, the descriptions of the "Method for Estimating Amount of Red Muscle", the "Analysis Device for Red Muscle", and the "Farming Method" also apply to this identified product of a marine fish. The marine fish may be a fish body in a round state or a processed product having a lower degree of processing than that of GG (Grilled and Gutted). In these cases, the red muscle is not exposed, and thus, the second information is highly useful. However, the processed product of a marine fish is not limited to these, and may be any of the examples described above.

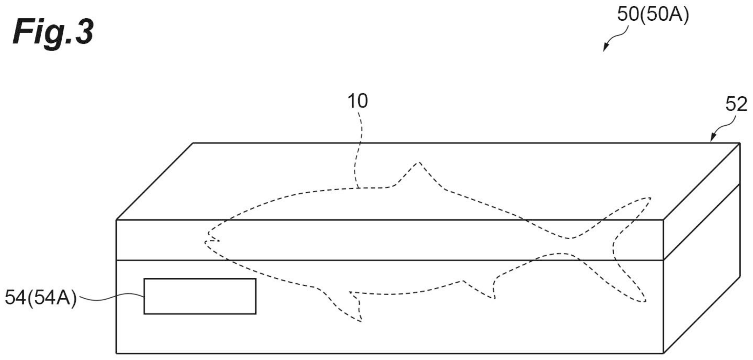

As illustrated in FIG. 3, an example of an identified product 50 of a marine fish includes a container 52, the fish body 10 in a round state housed in the container 52, and an identification portion 54. The identification portion 54 includes second information on the estimation result of the amount of the red muscle. The identification portion 54 may be a label or a barcode whose content can be read visually, or may be an IC tag (RF tag) or the like. The identification portion 54 may be a printed letter or a mark directly written on the container 52. Although only one fish body 10 is illustrated in FIG. 3, a plurality of fish bodies or a plurality of processed products may be housed in the container 52. That is, the identified product 50 of a marine fish may include a plurality of fish bodies or a plurality of processed products.

The second information included in the identification portion 54 may be information on an estimated value of the amount of the red muscle contained in the fish body or the processed product estimated by non-destructive inspection. Specifically, it may be an estimated value of the weight or volume of the red muscle. However, the second information need not include the estimated value of the amount of the red muscle. For example, the second information may be a symbol indicating that the content is a farmed fish farmed using, as an index, the estimated value of the amount of the red muscle obtained by the non-destructive inspection in the first embodiment of the above-described farming method. In a case where the identified product 50 of a marine fish includes a plurality of fish bodies or a plurality of processed products, the second information may include statistical information such as an average value, a standard deviation, a maximum value, or a minimum value of the amounts of the red muscles.

The second information may include the K value indicating the freshness of the fish body of the marine fish or the processed product of the marine fish. The equation for determining the K value and the numerical range are as described above. In a case where the identified product of a marine fish includes a plurality of fish bodies or a plurality of processed products, the arithmetic average value of the K values only needs to be within the above-described range.

Although FIG. 3 illustrates the fish body 10 in a round state, a modified example of the identified product of a marine fish may include one or more processed products of the marine fish in place of the fish body. Examples of the processed products of the marine fish are as described above. The container 52 is not limited to a box-shaped container, and may be a bag body. In this case, the bag body is provided with the identification portion. In another modified example, the fish body or processed product need not be housed in a container. In this case, the identification portion 54 may be attached to the fish body itself or the processed product itself.

Such an identified product of a marine fish has the identification portion 54, and thus, a demand side can easily identify a fish body or a processed product having a small amount of a red muscle even when the red muscle is not exposed. Accordingly, such an identified product has a high market value. In addition, in some markets, the red muscle is not preferred and is removed and discarded. In this case, the fish body or processed product having a small amount of the red muscle can increase the yield, and thus has a high market value.

An identified product of a marine fish according to a second embodiment includes: a fish body or a processed product of a marine fish; and an identification portion including information (fourth information) indicating that an amount of a pyloric caeca contained in the fish body or the processed product has been estimated by non-destructive inspection. The amount of the pyloric caeca contained in the fish body or processed product may be estimated by Method for Estimating Amount of Pyloric caeca described above. The fourth information may be related to an estimated value of the amount of the pyloric caeca obtained using Analysis Device for Pyloric caeca described above. The fish body and processed product of a marine fish may be a farmed fish obtained by the above-described farming method. Thus, the descriptions of Method for Estimating Amount of Pyloric caeca, Analysis Device for Pyloric caeca, and Farming Method also apply to this identified product of a marine fish. The marine fish may be a fish body in a round state or a processed product having a lower degree of processing than that of GG (Grilled and Gutted). In these cases, the pyloric caeca is not exposed, and thus, the fourth information is highly useful. However, the processed product of a marine fish is not limited to these, and may be any of the examples described above.

As illustrated in FIG. 3, an example of an identified product 50A of a marine fish includes a container 52, a fish body 10 in a round state housed in the container 52, and an identification portion 54A, as illustrated in FIG. 3. The identification portion 54A includes fourth information on the estimation result of the amount of the pyloric caeca. The identification portion 54A may be a label or a barcode whose content can be read visually, or may be an IC tag (RF tag) or the like. The identification portion 54A may be a printed letter or a mark directly written on the container 52. Although only one fish body 10 is illustrated in FIG. 3, a plurality of fish bodies or a plurality of processed products may be housed in the container 52. That is, the identified product 50A of a marine fish may include a plurality of fish bodies or a plurality of processed products.

The fourth information included in the identification portion 54A may be information on an estimated value of the amount of the pyloric caeca contained in the fish body or the processed product estimated by non-destructive inspection. Specifically, it may be an estimated value of the weight or volume of the pyloric caeca. However, the fourth information need not include the estimated value of the amount of the pyloric caeca. For example, the fourth information may be a symbol indicating that the content is a farmed fish farmed using, as an index, the estimated value of the amount of the pyloric caeca obtained by the non-destructive inspection in the second embodiment of the above-described farming method. In a case where the identified product 50 of a marine fish includes a plurality of fish bodies or a plurality of processed products, the fourth information may include statistical information such as an average value, a standard deviation, a maximum value, or a minimum value of the amounts of the pyloric caeca.

Although FIG. 3 illustrates the fish body 10 in a round state, a modified example of the identified product of a marine fish may include one or more processed products of a marine fish in place of the fish body. Examples of the processed products of a marine fish are as described above. The container 52 is not limited to a box-shaped container, and may be a bag body. In this case, the bag body is provided with the identification portion. In another modified example, the fish body or processed product need not be housed in a container. In this case, the identification portion 54A may be attached to the fish body itself or the processed product itself.

Such an identified product of a marine fish has the identification portion 54A, and thus, even when the pyloric caeca is not exposed, a demand side can easily identify a fish body or a processed product having a small amount of the pyloric caeca. Accordingly, such an identified product has a high market value. The pyloric caeca is usually removed. In this case, a fish body or processed product with a small amount of the pyloric caeca can have a high yield, and thus has a high market value.

Processed Product Group of Marine Fish

A processed product group of a marine fish according to a first embodiment includes a plurality of processed products of a marine fish, and a standard deviation of weight ratios of the red muscles included in the plurality of processed products is 1.5 wt.% or less. Such a processed product group of a marine fish can be obtained by Method for Producing Processed Product of Marine Fish described above. Thus, the description of Method for Producing Processed Product of Marine Fish described above also applies to this processed product group of a marine fish. The descriptions of the "Method for Estimating Amount of Red Muscle", the "Analysis Device for Red Muscle", the "Farming Method", and the "Identified Product of Marine Fish" described above also apply to this processed product group of a marine fish. Examples of the processed products of a marine fish are as described above.

The number of processed products included in the processed product group of a marine fish is not particularly limited, and may be 3 or more, 5 or more, or 10 or more. The number of processed products included in the processed product group of a marine fish may be 1000 or less, 500 or less, or 100 or less. The number of processed products included in the processed product group of a marine fish may be, for example, 3 to 1000, 5 to 1000, 10 to 1000, 3 to 500, 3 to 100, or 5 to 500. The processed product group of a marine fish may be housed in the container 52 or a bag body as illustrated in FIG. 3, or need not be housed.

In the processed product group of a marine fish of the present embodiment, the variation in weight of the red muscle is sufficiently reduced. Thus, the processed product group has high quality reliability and has a high market value. From the viewpoint of further reducing the variation in weight of the red muscle, the standard deviation of the weight ratios of the red muscles contained in the plurality of processed products may be 1.50 wt.% or less, 1.00 wt.% or less, 0.50 wt.% or less, 0.40 mass% or less, 0.30 mass% or less, 0.20 wt.% or less, or 0.10 wt.% or less. A standard deviation of weight ratios of the red muscles contained in the plurality of processed products may be 0.001 wt.% or more. The standard deviation of the weight ratios may be, for example, 0.001 wt.% to 1.50 wt.%, 0.001 wt.% to 1.00 wt.%, 0.001 wt.% to 0.50 wt.%, 0.001 wt.% to 0.40 wt.%, 0.001 wt.% to 0.30 wt.%, 0.001 wt.% to 0.20 wt.%, or 0.001 wt.% to 0.10 wt.%.

The processed product group of a marine fish may be obtained by processing a fish body of a marine fish in a round state or a processed product having a lower degree of processing than GG. The processed product group of a marine fish may be obtained by processing the first marine fish sorted in the step of sorting the farming method described above. Such a processed product group of a marine fish can reduce the amount of the red muscle. This makes it possible to maintain the freshness sufficiently high. The arithmetic average value of the K values of the processed product group of a marine fish may be as described above.

The processed product group of a marine fish may include an identification portion including second information on an estimated value of the amount of the red muscle. The second information and the identification portion may be as described above. This makes it possible to predict an amount of a red muscle based on the second information even when the red muscle is not exposed. Thus, the processed product group has high quality reliability and has a high market value.

A processed product group of a marine fish according to a second embodiment includes a plurality of processed products of a marine fish, and a standard deviation of weight ratios of pyloric caeca contained in the plurality of processed products is 10.0 wt.% or less. Such a processed product group of a marine fish can be obtained by Method for Producing Processed Product of Marine Fish described above. Thus, the description of Method for Producing Processed Product of Marine Fish also applies to this processed product group of a marine fish. The descriptions of Method for Estimating Amount of Pyloric caeca, Analysis Device for Pyloric caeca, Farming Method, and Identified Product of Marine Fish described above also apply to this processed product group of a marine fish. Examples of the processed product of a marine fish are as described above.

The number of processed products included in the processed product group of a marine fish is not particularly limited, and may be 3 or more, 5 or more, or 10 or more. The number of processed products included in the processed product group of a marine fish may be 1000 or less, 500 or less, or 100 or less. The number of processed products included in the processed product group of a marine fish may be, for example, 3 to 1000, 5 to 1000, 10 to 1000, 3 to 500, 3 to 100, or 5 to 500. The processed product group of a marine fish may be housed in the container 52 or a bag body as illustrated in FIG. 3, or need not be housed.

In the processed product group of a marine fish of the present embodiment, the variation in weight of the pyloric caeca is sufficiently reduced. Thus, the processed product group has high quality reliability and has a high market value. From the viewpoint of further reducing the variation in weight of the pyloric caeca, the standard deviation of the weight ratios of the pyloric caeca contained in the plurality of processed products may be 10.0 wt.% or less, 7.0 wt.% or less, 5.0 wt.% or less, 3.0 wt.% or less, 1.5 wt.% or less, 1.0 wt.% or less, 0.70 wt.% or less, 0.50 mass% or less, 0.30 mass% or less, 0.20 wt.% or less, or 0.10 wt.% or less. The standard deviation of the weight ratios of the pyloric caeca contained in the plurality of processed products may be 0.001 wt.% or more. The standard deviation of the weight ratios may be, for example, 0.001 wt.% to 10.0 wt.%, 0.001 wt.% to 7.0 wt.%, 0.001 wt.% to 5.0 wt.%, 0.001 wt.% to 3.0 wt.%, 0.001 wt.% to 2.0 wt.%, 0.001 wt.% to 1.0 wt.%, 0.001 wt.% to 0.70 wt.%, 0.001 wt.% to 0.50 wt.%, 0.001 wt.% to 0.30 wt.%, 0.001 wt.% to 0.20 wt.%, or 0.001 wt.% to 0.10 wt.%.

The processed product group of a marine fish may be obtained by processing a fish body of a marine fish in a round state or a processed product having a lower degree of processing than GG. The processed product group of a marine fish may be obtained by processing the first marine fish sorted in the step of sorting the farming method described above. Such a processed product group of a marine fish can reduce the amount of the pyloric caeca. This makes it possible to reduce an amount of the pyloric caeca to be discarded, thereby increasing the yield. The arithmetic average value of the K values of the processed product group of a marine fish may be as described above.

The processed product group of a marine fish may include an identification portion including fourth information on an estimated value of the amount of the pyloric caeca. The fourth information and the identification portion may be as described above. This makes it possible to predict an amount of a pyloric caeca based on the fourth information even when the pyloric caeca is not exposed. Thus, the processed product group has high quality reliability and has a high market value.

Although the embodiments of the present disclosure have been described above, the present disclosure is not limited to the above embodiments. The present disclosure includes the following [1] to [38].

[1] A method for estimating an amount of a red muscle, the method comprising: an information acquisition step of acquiring information on a red muscle in a fish body of a marine fish by non-destructive inspection; and an estimation step of estimating an amount of the red muscle contained in the fish body based on the information.

[2] The estimation method according to [1], wherein the information acquired in the information acquisition step includes a cross-sectional area of the red muscle determined from a cross-sectional image of the fish body, and the amount of the red muscle is estimated based on the cross-sectional area in the estimation step.

[3] The estimation method according to [1] or [2], further comprising
a weight measurement step of measuring a weight of the fish body, wherein in the estimation step, the weight of the red muscle is estimated based on the weight of the fish body and the cross-sectional area of the red muscle.

[4] The estimation method according to any one of [1] to [3], wherein the non-destructive inspection uses at least one selected from the group consisting of ultrasonic inspection, MRI inspection, and CT inspection.

[5] The estimation method according to any one of [1] to [4], wherein the information is acquired from a transverse section image between the fourth vertebra to the twenty-second vertebra or a transverse section image between a second dorsal fin beginning portion and a vicinity of an anus, of the marine fish.

[6] The estimation method according to any one of [1] to [5], wherein the information is acquired from a transverse section image between an eleventh vertebra to a seventeenth vertebra or a transverse section of a vicinity of the anus.

[7] A method for producing a processed product of a marine fish, the method comprising a step of processing the marine fish in which the amount of the red muscle has been estimated by the estimation method according to any one of [1] to [6].

[8] A method for farming a marine fish, the method comprising using an estimated value of an amount of a red muscle contained in a fish body of a marine fish as an index in any step of a farming process.

[9] The method for farming a marine fish according to [8], the method further comprising a step of sorting the marine fish based on the estimated value.

[10] The method for farming a marine fish according to [8] or [9], wherein the estimated value is a value estimated based on an image of the red muscle in the fish body acquired by non-destructive inspection.

[11] A method for producing a processed product of a marine fish, the method comprising a step of processing the marine fish farmed by the farming method according to any one of [8] to [10] above.

[12] An analysis device comprising: a non-destructive inspection unit that acquires information on a red muscle in a fish body of a marine fish by non-destructive inspection; and a red muscle estimation unit that estimates an amount of the red muscle contained in the fish body of the marine fish based on the information.

[13] The analysis device according to [12], wherein the non-destructive inspection unit includes at least one selected from the group consisting of an ultrasonic inspection unit, an MRI inspection unit, and a CT inspection unit.

[14] An identified product of a marine fish, comprising: a fish body or a processed product of a marine fish; and an identification portion including information indicating that an amount of a red muscle contained in the fish body or the processed product has been estimated by non-destructive inspection.

[15] A processed product group of a marine fish, comprising a plurality of processed products of a marine fish, wherein a standard deviation of weight ratios of red muscles contained in the plurality of processed products is 1.5 wt.% or less.

[16] The processed product group of a marine fish according to [15], having a K value of 35% or less.

[17] The processed product group of a marine fish according to [15] or [16], further comprising an identification portion including information on an estimated value of a weight of a red muscle contained in each of the plurality of processed products.

[18] The processed product group of a marine fish according to any one of [15] to [17], being obtained by processing a fish body of the marine fish in a round state or a processed product of the marine fish having a lower degree of processing than GG.

[19] A processed product group of a marine fish obtained by processing a first marine fish that is a part of the marine fish sorted in the step of sorting the marine fish in the farming method according to [9] or [10] above.

[20] A method for estimating an amount of a pyloric caeca, the method comprising: an information acquisition step of acquiring information on a pyloric caeca in a fish body of a marine fish by non-destructive inspection; and an estimation step of estimating an amount of the pyloric caeca contained in the fish body based on the information.

[21] The estimation method according to [20], wherein the information acquired in the information acquisition step includes a cross-sectional area of the pyloric caeca determined from a cross-sectional image of the fish body, and in the estimation step, the amount of the pyloric caeca is estimated based on the cross-sectional area.

[22] The estimation method according to [21], further comprising a weight measurement step of measuring a weight of the fish body, wherein in the estimation step, a weight of the pyloric caeca is estimated based on the weight of the fish body and the cross-sectional area of the pyloric caeca.

[23] The estimation method according to any one of [20] to [22], wherein the non-destructive inspection uses at least one selected from the group consisting of ultrasonic inspection, MRI inspection, and CT inspection.

[24] The estimation method according to any one of [20] to [23], wherein the information is acquired from a transverse section image between a second vertebra to an eleventh vertebra of the marine fish or a transverse section image between a pectoral fin beginning portion and a second dorsal fin beginning portion.

[25] The estimation method according to any one of [20] to [24], wherein the information is acquired from a transverse section image between the fourth vertebra to the ninth vertebra of the marine fish or a transverse section image of a vicinity of a pelvic fin root.

[26] A method for producing a processed product of a marine fish, the method comprising a step of processing the marine fish in which the amount of the pyloric caeca has been estimated by the estimation method according to any one of [20] to [25] above.

[27] A method for farming a marine fish, the method comprising using an estimated value of an amount of a pyloric caeca contained in a fish body of a marine fish as an index in any step of a farming process.

[28] The method for farming a marine fish according to [27], the method further comprising a step of sorting the marine fish based on the estimated value.

[29] The method for farming a marine fish according to [27] or [28], wherein the estimated value is a value estimated based on an image of the pyloric caeca in the fish body acquired by non-destructive inspection.

[30] A method for producing a processed product of a marine fish, the method comprising a step of processing the marine fish farmed by the farming method according to any one of [27] to [29].

[31] An analysis device comprising:

a non-destructive inspection unit that acquires information on a pyloric caeca in a fish body of a marine fish by non-destructive inspection; and

a pyloric caeca estimation unit that estimates an amount of the pyloric caeca contained in the fish body based on the information.

[32] The analysis device according to [31], wherein the non-destructive inspection unit includes at least one selected from the group consisting of an ultrasonic inspection unit, an MRI inspection unit, and a CT inspection unit.

[33] An identified product of a marine fish, comprising: a fish body or a processed product of a marine fish; and an identification portion including information indicating that an amount of a pyloric caeca contained in the fish body or the processed product has been estimated by non-destructive inspection.

[34] A processed product group of a marine fish, comprising a plurality of processed products of a marine fish, wherein a standard deviation of weight ratios of pyloric caeca contained in the plurality of processed products is 10.0 wt.% or less.

[35] The processed product group of a marine fish according to [34], having a K value of 35% or less.

[36] The processed product group of a marine fish according to [34] or [35], further comprising an identification portion including information on an estimated value of a weight of a pyloric caeca included in each of the plurality of processed products.

[37] The processed product group of a marine fish according to any one of [34] to [36], being obtained by processing a fish body of a marine fish in a round state or a processed product of marine fish having a lower degree of processing than GG.

[38] A processed product group of a marine fish, being obtained by processing a first marine fish that is a part of the marine fish, the first marine fish being sorted in the step of sorting the marine fish in the farming method according to [28] above.

Examples

Although the content of the present disclosure is explained below in further detail with reference to Examples, the present disclosure is not limited to Examples described below.

Example 1: Relationship (1) between Cross-Sectional Area (Measured Value) of Red Muscle and Weight of Red Muscle

The following examination was performed to identify a position where a cross-sectional area of a red muscle and a weight of the red muscle correlate with each other. Eight yellowtails randomly sampled on the sea were sliced at three sites, and cross-sectional areas of a red muscle and an white muscle in the three transverse sections were measured. The cut sites were a pelvic fin beginning portion (a), a second dorsal fin beginning portion (b), and an anus (c). The white muscle and the red muscle were cut out from the cut yellowtail and weighed. A body weight, fork length, condition factor, sex, weight of the white muscle, and a weight of the red muscle of the yellowtail used for the measurement were as shown in Table 1. The condition factor was calculated by the following calculation equation. The cross-sectional areas of the red muscle and the white muscle in each of the transverse sections of (a), (b), and (c) were as shown in Table 2.

$$\text{Condition factor} = \text{weight (g)} / [\text{fork length (cm)}]^3\} \times 1000$$

[Table 1]

| n | Body Weight [g] | Fork length [cm] | Condition factor | Sex | Weight of white muscle [g] | Weight of red muscle [g] |
|---|---|---|---|---|---|---|
| 1 | 3251 | 63.2 | 12.9 | Male | 597.0 | 121.5 |

(continued)

| n | Body Weight [g] | Fork length [cm] | Condition factor | Sex | Weight of white muscle [g] | Weight of red muscle [g] |
|---|---|---|---|---|---|---|
| 2 | 3420 | 64.2 | 12.9 | Male | 766.5 | 136.5 |
| 3 | 3125 | 62.4 | 12.9 | Male | 668.5 | 111.5 |
| 4 | 3185 | 63.0 | 12.7 | Male | 673.0 | 136.0 |
| 5 | 4235 | 71.5 | 11.6 | Female | 810.0 | 181.0 |
| 6 | 3010 | 60.9 | 13.3 | Male | 616.5 | 120.5 |
| 7 | 3060 | 62.0 | 12.8 | Female | 612.0 | 115.0 |
| 8 | 3330 | 64.8 | 12.2 | Female | 631.5 | 139.0 |

[Table 2]

| n | Cross-sectional area of white muscle | | | Cross-sectional area of red muscle | | |
|---|---|---|---|---|---|---|
| | (a) [cm$^2$] | (b) [cm$^2$] | (c) [cm$^2$] | (a) [cm$^2$] | (b) [cm$^2$] | (c) [cm$^2$] |
| 1 | 30.987 | 34.311 | 23.931 | 3.494 | 5.134 | 5.545 |
| 2 | 30.755 | 32.880 | 27.458 | 3.742 | 4.960 | 5.706 |
| 3 | 30.269 | 29.870 | 22.697 | 2.263 | 4.534 | 4.364 |
| 4 | 27.173 | 31.656 | 23.057 | 3.703 | 4.723 | 5.631 |
| 5 | 33.345 | 35.328 | 28.681 | 3.227 | 5.433 | 6.228 |
| 6 | 32.098 | 29.421 | 25.196 | 4.654 | 3.079 | 5.452 |
| 7 | 25.411 | 31.043 | 23.744 | 2.560 | 4.437 | 4.527 |
| 8 | 30.914 | 34.020 | 21.509 | 2.938 | 4.330 | 4.921 |

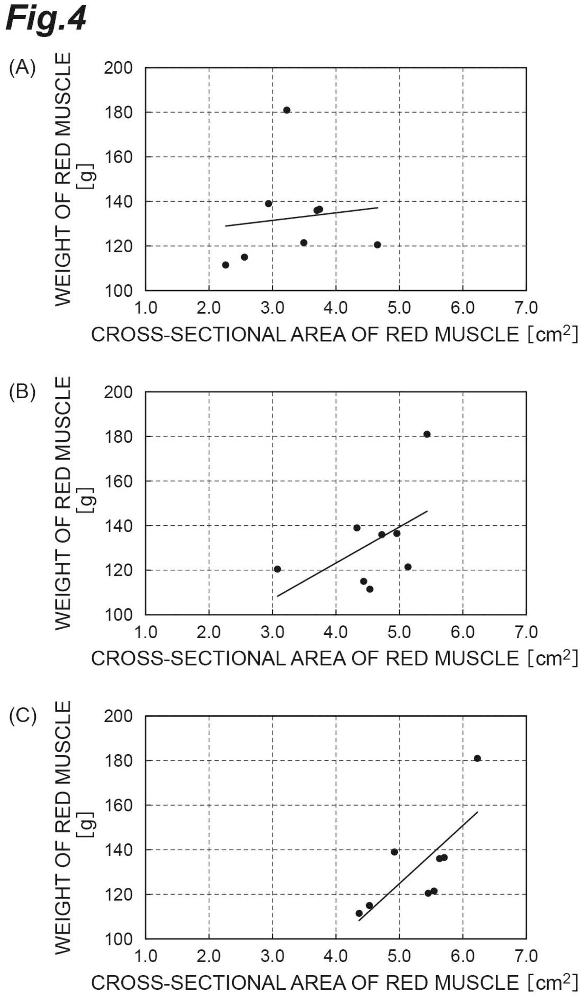

FIG. 4(A) is a graph showing a relationship between a cross-sectional area of the red muscle and a weight of the red muscle in the pelvic fin beginning portion (position A in FIG. 2). FIG. 4(B) is a graph showing a relationship between a cross-sectional area of the red muscle and a weight of the red muscle in the second dorsal fin beginning portion (position B in FIG. 2). FIG. 4(C) is a graph showing a relationship between a cross-sectional area of the red muscle and a weight of the red muscle in the anus (position of the probe 22 in FIG. 2). When the results of FIG. 4(A), FIG. 4(B), and FIG. 4 (C) are compared, FIG. 4(C) shows the strongest correlation. Using the data shown in Table 2, a Pearson's product-moment correlation coefficient (PCC, hereinafter referred to as "product-moment correlation coefficient") of each of the cut sites (a), (b), and (c) was determined. The results were as shown in Table 3. As a result, the product-moment correlation coefficient between the cross-sectional area of the red muscle and the weight of the red muscle measured in the transverse section passing through the second dorsal fin beginning portion (b) and the anus (c) exceeded 0.4, and it was confirmed that there was a certain degree of correlation. The product-moment correlation coefficient between the cross-sectional area of the red muscle and the weight of the red muscle measured in the transverse section passing through the anus (c) exceeded 0.7, and it was confirmed that there was a strong correlation.

[Table 3]

| Cut site | (a) Pelvic fin beginning portion | (b) Second dorsal fin beginning portion | (c) Anus |
|---|---|---|---|
| Product-moment correlation coefficient | 0.12 | 0.52 | 0.75 |

Example 2: Relationship (2) between Cross-Sectional Area (Measured Value) of Red Muscle and Weight of Red Muscle

Ten yellowtails randomly sampled on the sea were sliced at eight sites, and cross-sectional areas of the red muscle and the white muscle in each of the eight transverse sections were measured. The cut sites were as follows. The names of the respective parts were as described in Atlas of Fish Anatomy (Akira Ochiai, Midori Shobo, 1987, p. 192).

(i) Between the second vertebra and the fourth vertebra
(ii) Between the fourth vertebra and the seventh vertebra
(iii) Between the seventh vertebra and the ninth vertebra
(iv) Between the ninth vertebra and the eleventh vertebra
(v) Between the eleventh vertebra and the fourteenth vertebra
(vi) Between the fourteenth vertebra and the seventeenth vertebra
(vii) Between the seventeenth vertebra and the nineteenth vertebra
(viii) Between the nineteenth vertebra and the twenty second vertebra

The white muscle and the red muscle were cut out from each of the cut yellowtails and weighed. The body weight, fork length, condition factor, weight of the white muscle, and weight of the red muscle of each of the yellowtails used for the measurement were as shown in Table 4. The cross-sectional area of the red muscle in each cross-section was as shown in Table 5. Using the data shown in Table 5, the product-moment correlation coefficient between the cross-sectional area and the weight of each red muscle was determined. The results were as shown in Table 6.

As shown in Table 6, the product-moment correlation coefficient exceeded 0.4 in the range of (ii) to (viii), which was from the fourth vertebra to the twenty second vertebra, and it was confirmed that there was a certain degree of correlation. In the range of (v) to (vi), which was from the eleventh vertebra to the seventeenth vertebra, the product-moment correlation coefficient exceeded 0.7, and it was confirmed that there was a strong correlation. Note that the anus is between (v) and (vi). The white muscle is present from the back side to the ventral side, unlike the red muscle located in the central portion of the lateral side of the fish body. Thus, the influence of the fish body size is highly likely to be greatly reflected, and it is difficult to accurately measure the entire area of the white muscle. In contrast, the area of the red muscle located in the central portion of the lateral side of the fish body can be measured with higher accuracy than the area of the white muscle. Thus, in each section from the fourth vertebra to the twenty-second vertebra, a higher product-moment correlation coefficient was obtained than in the other sections. From the results of Table 3 and Table 6, it was considered that a strong correlation was similarly achieved even when the area was measured by acquiring the transverse section using another method, for example, a non-destructive inspection method such as capturing of an echo image.

[Table 4]

| n | Body Weight [9] | Fork length [cm] | Condition factor | Weight of white muscle [g] | Weight of red muscle [g] |
|---|---|---|---|---|---|
| 1 | 537 | 32.5 | 15.6 | 103.0 | 18.1 |
| 2 | 607 | 34.0 | 15.4 | 123.1 | 18.9 |
| 3 | 423 | 30.4 | 15.1 | 84.0 | 14.5 |
| 4 | 475 | 31.8 | 14.8 | 96.8 | 16.9 |
| 5 | 399 | 30.6 | 13.9 | 80.4 | 13.3 |
| 6 | 481 | 31.7 | 15.1 | 92.1 | 15.9 |
| 7 | 534 | 33.0 | 14.9 | 99.4 | 19.8 |
| 8 | 568 | 32.9 | 15.9 | 114.6 | 18.4 |
| 9 | 518 | 32.6 | 15.0 | 105.7 | 17.3 |
| 10 | 625 | 33.8 | 16.2 | 128.8 | 19.9 |

[Table 5]

| n | Cross-sectional area (red muscle) | | | | | | | |
|---|---|---|---|---|---|---|---|---|
| | (i) [cm$^2$] | (ii) [cm$^2$] | (iii) [cm$^2$] | (iv) [cm$^2$] | (v) [cm$^2$] | (vi) [cm$^2$] | (vii) [cm$^2$] | (viii) [cm$^2$] |
| 1 | 1.104 | 1.068 | 1.223 | 1.103 | 1.064 | 0.882 | 0.644 | 0.403 |
| 2 | 0.911 | 1.208 | 1.093 | 1.189 | 1.133 | 1.021 | 0.979 | 0.588 |
| 3 | 0.464 | 0.893 | 0.858 | 0.815 | 0.884 | 0.829 | 0.594 | 0.371 |
| 4 | 0.976 | 1.107 | 1.141 | 0.953 | 1.033 | - | 0.668 | 0.421 |
| 5 | 0.739 | 0.800 | 0.802 | 0.910 | 0.726 | 0.537 | 0.465 | 0.216 |
| 6 | 0.761 | 0.775 | 0.923 | 0.950 | 0.937 | 0.808 | 0.459 | 0.286 |

(continued)

| n | Cross-sectional area (red muscle) | | | | | | | |
|---|---|---|---|---|---|---|---|---|
| | (i) [cm²] | (ii) [cm²] | (iii) [cm²] | (iv) [cm²] | (v) [cm²] | (vi) [cm²] | (vii) [cm²] | (viii) [cm²] |
| 7 | 0.732 | 0.765 | 0.911 | 0.912 | 0.990 | 0.862 | 0.575 | 0.341 |
| 8 | 0.733 | 1.136 | 0.968 | 1.038 | 1.022 | 0.887 | 0.583 | 0.339 |
| 9 | 0.484 | 0.783 | 0.868 | 1.025 | 0.909 | 0.938 | 0.676 | 0.431 |
| 10 | 0.849 | 1.117 | 1.126 | 1.26 | 1.202 | 0.981 | 0.696 | 0.316 |
| In Table 5, "-" indicates that the measurement was not performed. | | | | | | | | |

[Table 6]

| Cut site | (i) | (ii) | (iii) | (iv) | (v) | (vi) | (vii) | (viii) |
|---|---|---|---|---|---|---|---|---|
| Product-moment correlation coefficient | 0.37 | 0.46 | 0.58 | 0.68 | 0.86 | 0.80 | 0.53 | 0.42 |

Example 3: Capturing of Transverse Sectional Echo Image by Ultrasonic Inspection Device

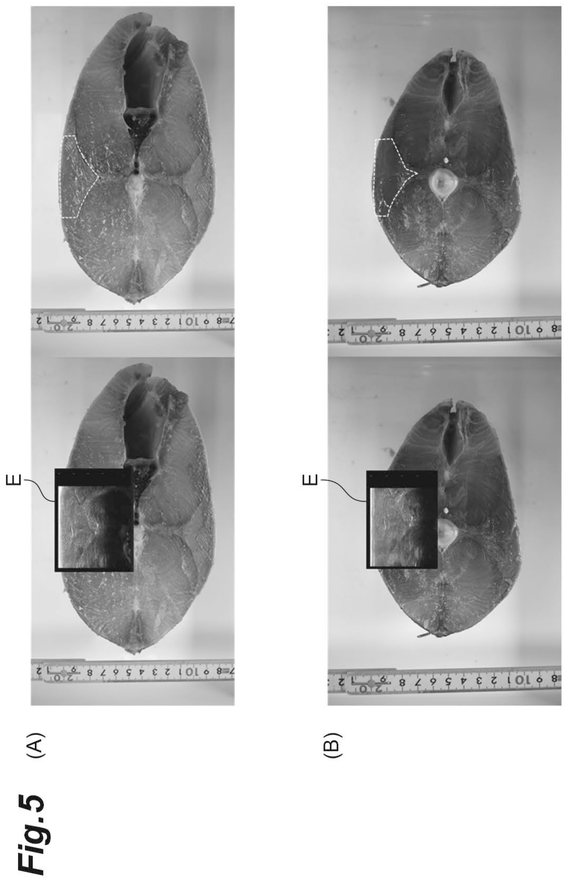

Anesthesia was applied to a yellowtail randomly sampled on the sea, and an echo image of a transverse section of the fish body was taken using a commercially available ultrasonic inspection device shown below. After the photographing, the yellowtail was cut at the site where the transverse section echo image was taken, and the photograph of the transverse section echo image was compared with the actual photograph of the actual cut surface. FIGS. 5(A) and 5(B) show the results. FIG. 5(A) is a photograph of the vicinity of the dorsal fin root, and FIG. 5(B) is a photograph of the vicinity of the anus. In both FIGS. 5(A) and 5(B), the left photograph shows a transverse section echo image E of the red muscle overlapped with the photograph of the cross-sectional image, and the right photograph shows the red muscle observed in the photograph of the actual cut surface surrounded by a dotted line. From these results, it was confirmed that the epithelial side can be determined as the red muscle with a boundary line appearing white in the muscle as a boundary in the transverse section echo image by the ultrasonic inspection device.

Ultrasonic Inspection Device

Model name: MyLabOne VET
Manufacturer: Esaote Europe B.V. (The Netherlands)
Medical device approval number: 24 Animal drug 2892
Probe: Linear-type SV3513
Focal length: 0 to 150 mm
B-mode frequency: 6.0, 8.0, 10.0 MHz

Example 4: Relationship (1) between Cross-Sectional Area of Red Muscle by Transverse Section Echo Image and Weight of Red Muscle

Anesthesia was applied to ten yellowtails randomly sampled on the sea and the ten yellowtails were placed sideways on a measurement table. The body weight and sex of each of the yellowtails used for the measurement were as shown in Table 7. In the same manner as in Example 3, an echo image of a transverse section passing through the anus of each fish body was taken, and a portion of the red muscle was specified. The cross-sectional area of the red muscle was determined by performing image processing on the photograph of the captured transverse section echo image using image processing software (Image J). The cross-sectional areas determined from the transverse section echo images were as shown in Table 7. After ultrasonic inspection, each fish body was disassembled to take out the red muscle and the white muscle, and the weights of the red muscle and the white muscle were measured using a scale. The measurement results were as shown in Table 7.

## EP 4 711 756 A1

[Table 7]

| n | Body Weight [g] | Sex | Cross-sectional area of red muscle [cm²] | Weight of white muscle [g] | Weight of red muscle [g] |
|---|---|---|---|---|---|
| 1 | 690 | Female | 1.313 | 138.83 | 26.30 |
| 2 | 590 | Male | 1.151 | 119.25 | 23.16 |
| 3 | 576 | Female | 1.076 | 112.48 | 22.80 |
| 4 | 593 | Male | 1.102 | 115.43 | 21.06 |
| 5 | 684 | Male | 1.267 | 134.40 | 27.95 |
| 6 | 659 | Female | 1.230 | 125.99 | 24.15 |
| 7 | 702 | Male | 1.387 | 141.42 | 28.93 |
| 8 | 556 | Male | 0.912 | 110.45 | 16.90 |
| 9 | 551 | Male | 0.958 | 100.67 | 19.26 |
| 10 | 545 | Male | 0.977 | 103.89 | 18.38 |
| Average value | 615 | - | 1.137 | 120.28 | 22.89 |

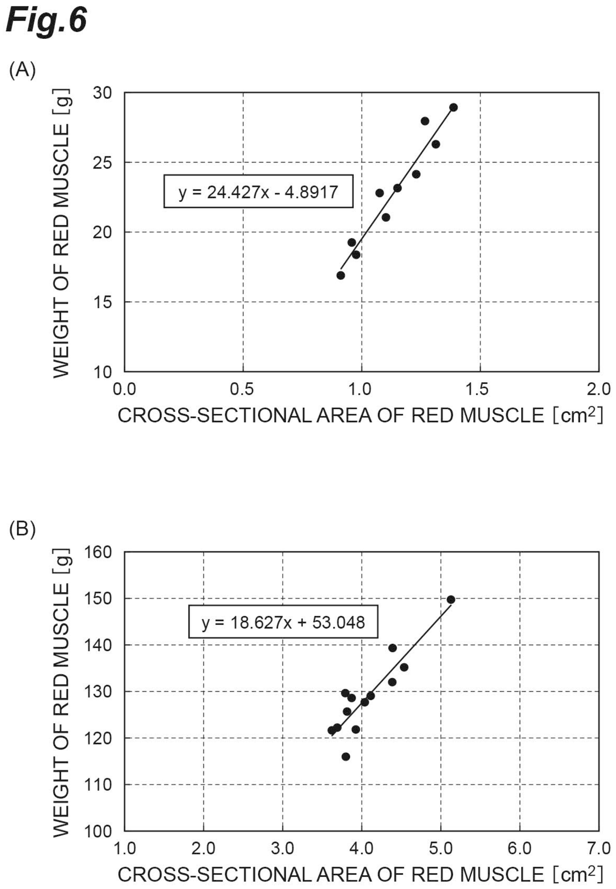

FIG. 6(A) is a graph showing a relationship between the cross-sectional area of the red muscle determined from the transverse section echo image and the weight of the red muscle actually measured, shown in Table 7. As shown in FIG. 6(A), the cross-sectional area of the red muscle determined from the transverse section echo image and the weight of the red muscle actually measured showed an extremely good correlation. Using the data shown in Table 7, the product-moment correlation coefficient between the cross-sectional area of the red muscle determined from the transverse section echo image and the weight of the red muscle actually measured was determined. As a result, the product-moment correlation coefficient was 0.97. This value was higher than the product-moment correlation coefficient shown in Tables 3 and 6. In addition, the product-moment correlation coefficient between the cross-sectional area of the red muscle and the weight of the white muscle shown in Table 7 was determined. As a result, the product-moment correlation coefficient was 0.96. From this result, it has been found that the weight of the white muscle can also be estimated with high accuracy from the cross-sectional area of the red muscle. It was considered that atrophy or deformation of tissues of the red muscle and the white muscle due to the cutting was small in the non-destructive inspection, and thus the estimation with higher accuracy was possible.

Example 5: Relationship (2) between Cross-Sectional Area of Red Muscle by Transverse Section Echo Image and Weight of Red Muscle

Using 13 yellowtails randomly sampled on the sea, the correlation between the cross-sectional area of the red muscle determined from the transverse section echo image and the weight of the red muscle actually measured was examined in the same manner as in Example 4. The body weight, fork length, condition factor, and sex of each of the yellowtails used for the measurement were as shown in Table 8. The cross-sectional area determined from the transverse section echo image and the weights of the red muscle and the white muscle that were actually measured were as shown in Table 8.

[Table 8]

| n | Body Weight [g] | Fork length [cm] | Condition factor | Sex | Cross-sectional area of red muscle [cm²] | Weight of white muscle [g] | Weight of red muscle [g] |
|---|---|---|---|---|---|---|---|
| 1 | 3230 | 52.4 | 22.4 | Male | 3.871 | 610.99 | 128.63 |
| 2 | 2890 | 50.8 | 22.0 | Male | 3.814 | 545.18 | 125.68 |
| 3 | 3015 | 50.6 | 23.3 | Male | 4.113 | 627.96 | 129.06 |
| 4 | 2720 | 51.1 | 20.4 | Female | 3.690 | 519.97 | 122.27 |
| 5 | 2810 | 50.7 | 21.6 | Male | 3.791 | 543.65 | 129.64 |

(continued)

| n | Body Weight [g] | Fork length [cm] | Condition factor | Sex | Cross-sectional area of red muscle [cm$^2$] | Weight of white muscle [g] | Weight of red muscle [g] |
|---|---|---|---|---|---|---|---|
| 6 | 3095 | 52.0 | 22.0 | Female | 4.037 | 642.44 | 127.69 |
| 7 | 3005 | 52.4 | 20.9 | Male | 4.391 | 566.48 | 139.33 |
| 8 | 2530 | 48.2 | 22.6 | Female | 3.622 | 479.95 | 121.66 |
| 9 | 2830 | 50.5 | 22.0 | Male | 4.537 | 546.99 | 135.20 |
| 10 | 2885 | 51.0 | 21.7 | Female | 4.386 | 555.87 | 132.02 |
| 11 | 3285 | 51.8 | 23.6 | Male | 5.127 | 608.10 | 149.73 |
| 12 | 2645 | 49.7 | 21.5 | Female | 3.798 | 485.66 | 116.00 |
| 13 | 2470 | 49.5 | 20.4 | Male | 3.924 | 451.35 | 121.85 |
| Average value | 2878 | 50.8 | 21.9 | - | 4.085 | 552.66 | 129.14 |

FIG. 6(B) is a graph showing a relationship between the cross-sectional area of the red muscle determined from the transverse section echo image and the weight of the red muscle actually measured, shown in Table 8. As shown in FIG. 6(B), the cross-sectional area of the red muscle determined from the transverse section echo image and the weight of the red muscle actually measured showed an extremely good correlation. Using the data shown in Table 8, the product-moment correlation coefficient between the cross-sectional area of the red muscle determined from the transverse section echo image and the weight of the red muscle actually measured was determined. As a result, the product-moment correlation coefficient was 0.90. This value was also higher than the product-moment correlation coefficients shown in Tables 3 and 6.

As shown in the column of body weight in each of Tables 7 and 8, the body weights of the fish bodies used in Examples 4 and 5 are significantly different. From this, it has been confirmed that the weight of the red muscle can be estimated with high accuracy based on the cross-sectional area of the red muscle determined from the transverse section echo image, regardless of the body weight of the fish body. FIGS. 6(A) and 6(B) show correlation equations calculated based on the respective data. When the correlation equation is set for each body weight of fish bodies, the weight of the red muscle can be estimated with higher accuracy.

Example 6: Standard Deviation of Weight Ratios of Red Muscles

The cross-sectional area of the red muscle of each of 33 yellowtails (5 groups) randomly sampled on the sea was measured using the body weight and the echo image in the same manner as in Example 4. In addition, as in Example 4, after the ultrasonic inspection, each fish body was disassembled to take out the red muscle and the white muscle, and the weights of the red muscle and the white muscle were measured using a scale. The results were as shown in Tables 9 and 10. The weights of the yellowtails were from 399 g to 3285 g, the average value of the weights was 1476 g, and the standard deviation was 1141 g. The cross-sectional areas of the red muscles of the yellowtails sampled were 0.726 cm$^2$ to 5.127 cm$^2$, the average value of the weights of the red muscles was 63 g, and the standard deviation was 54 g. An amount of red muscle tissue estimation score of each individual was determined to be 2.17 for the maximum value, 1.20 for the minimum value, 1.70 for the average value, 1.79 for the median, and 0.25 for the standard deviation. Note that the amount of red muscle tissue estimation score was calculated by the following equation. Tables 9 and 10 show the 33 yellowtails classified into five groups based on the value of the amount of red muscle tissue estimation score.

Amount of red muscle tissue estimation score = cross-sectional area of red muscle (cm$^2$)/body weight (g) $\times$ 1000

Group 4 in Table 10 shows individuals (yellowtails) with an amount of red muscle tissue estimation score within the median $\pm 5\%$. Note that % of the amount of red muscle tissue estimation score is a value obtained by dividing the difference between the maximum value and the minimum value of the amount of red muscle tissue estimation score by 100. The number of individuals belonging to Group 4 was 14.

For all the 33 individuals, the weight of the red muscle was measured in the same manner as in Example 1, and the weight ratio (%) of the red muscle to the body weight was determined. The weight ratio of the red muscle to the body weight was 3.04 wt.% to 4.93 wt.%, the average value of the weight ratio of the red muscle to the body weight was 3.91 wt.%, and the standard deviation was 0.56 wt.%. On the other hand, the weight ratios of the red muscles to the body weights of the 14 individuals of Group 4 collected based on the amount of red muscle tissue estimation score were 3.11 wt.% to 4.12 wt.%, the average value of the weight ratios of the red muscles to the body weights was 3.60 wt.%, and the standard deviation was 0.33 wt.%. For the other groups, the average value and standard deviation of the weight ratios of the red muscles to the body weights were determined. As a result, the standard deviation of each group was smaller than the value (0.56 wt.%) for all the 33 individuals. That is, by using the amount of red muscle tissue estimation score, it was possible to obtain a group with a reduced variation in weight ratio of the red muscle to the body weight in a non-destructive state.

[Table 9]

| Group number | n | Body Weight [g] | Weight of white muscle [g] | Weight of red muscle [g] | Cross-sectional area of red muscle [cm$^2$] | Weight ratio of red muscle to body weight [wt.%] | Amount of red muscle tissue estimation score |
|---|---|---|---|---|---|---|---|
| Group 1 | 1 | 3230 | 610.99 | 128.63 | 3.871 | 3.98 | 1.20 |
| | 2 | 2890 | 545.18 | 125.68 | 3.814 | 4.35 | 1.32 |
| | 3 | 3015 | 627.96 | 129.06 | 4.113 | 4.28 | 1.36 |
| | 4 | 2720 | 519.97 | 122.27 | 3.690 | 4.50 | 1.36 |
| | 5 | 2810 | 543.65 | 129.64 | 3.791 | 4.61 | 1.35 |
| | 6 | 3095 | 642.44 | 127.69 | 4.037 | 4.13 | 1.30 |
| | | | | | Average value | 4.31 | |
| | | | | | Standard deviation | 0.21 | |
| Group 2 | 7 | 3005 | 566.48 | 139.33 | 4.391 | 4.64 | 1.46 |
| | 8 | 2530 | 479.95 | 121.66 | 3.622 | 4.81 | 1.43 |
| | 9 | 2830 | 546.99 | 135.20 | 4.537 | 4.78 | 1.60 |
| | 10 | 2885 | 555.87 | 132.02 | 4.386 | 4.58 | 1.52 |
| | 11 | 3285 | 608.10 | 149.73 | 5.127 | 4.56 | 1.56 |
| | 12 | 2645 | 485.66 | 116.00 | 3.798 | 4.39 | 1.44 |
| | 13 | 2470 | 451.35 | 121.85 | 3.924 | 4.93 | 1.59 |
| | | | | | Average value | 4.67 | |
| | | | | | Standard deviation | 0.17 | |
| Group 3 | 14 | 556 | 110.45 | 16.90 | 0.912 | 3.04 | 1.64 |
| | 15 | 551 | 100.67 | 19.26 | 0.958 | 3.50 | 1.74 |
| | 16 | 545 | 103.89 | 18.38 | 0.977 | 3.37 | 1.79 |
| | 17 | 518 | 105.70 | 17.26 | 0.909 | 3.33 | 1.75 |
| | | | | | Average value | 3.31 | |
| | | | | | Standard deviation | 0.17 | |

[Table 10]

|  | n | Body Weight [g] | Weight of white muscle [g] | Weight of red muscle [g] | Cross-sectional area of red muscle [cm$^2$] | Weight ratio of red muscle to body weight [wt.%] | Amount of red muscle tissue estimation score |
|---|---|---|---|---|---|---|---|
| Group 4 | 18 | 690 | 138.83 | 26.30 | 1.313 | 3.81 | 1.90 |
|  | 19 | 590 | 119.25 | 23.16 | 1.151 | 3.93 | 1.95 |
|  | 20 | 576 | 112.48 | 22.80 | 1.076 | 3.96 | 1.87 |
|  | 21 | 593 | 115.43 | 21.06 | 1.102 | 3.55 | 1.86 |
|  | 22 | 684 | 134.40 | 27.95 | 1.267 | 4.09 | 1.85 |
|  | 23 | 659 | 125.99 | 24.15 | 1.230 | 3.66 | 1.87 |
|  | 24 | 702 | 141.42 | 28.93 | 1.387 | 4.12 | 1.98 |
|  | 25 | 537 | 103.00 | 18.13 | 1.064 | 3.38 | 1.98 |
|  | 26 | 607 | 123.11 | 18.85 | 1.133 | 3.11 | 1.87 |
|  | 27 | 399 | 80.37 | 13.33 | 0.726 | 3.34 | 1.82 |
|  | 28 | 481 | 92.08 | 15.86 | 0.937 | 3.30 | 1.95 |
|  | 29 | 534 | 99.41 | 19.81 | 0.990 | 3.71 | 1.85 |
|  | 30 | 568 | 114.59 | 18.35 | 1.022 | 3.23 | 1.80 |
|  | 31 | 625 | 128.80 | 19.94 | 1.202 | 3.19 | 1.92 |
|  |  |  |  |  | Average value | 3.60 |  |
|  |  |  |  |  | Standard deviation | 0.33 |  |
| Group 5 | 32 | 423 | 83.99 | 14.53 | 0.884 | 3.43 | 2.09 |
|  | 33 | 475 | 96.81 | 16.86 | 1.033 | 3.55 | 2.17 |
|  |  |  |  |  | Average value | 3.49 |  |
|  |  |  |  |  | Standard deviation | 0.06 |  |

Example 7: Relationship Between Cross-Sectional Area of Pyloric caeca by Transverse Section Echo Image and Weight of Pyloric caeca

The pyloric caeca was examined in the same manner as in Examples 1 to 6. Using 10 yellowtails randomly sampled on the sea, a position having a strong correlation was examined from the cross-sectional area of the pyloric caeca determined from the transverse section echo image and the weight of the pyloric caeca actually measured. As a result, it was found that there was a strong correlation between the transverse section echo image of the pelvic fin root and the weight of the pyloric caeca.

The body weight, fork length, and condition factor of these 10 yellowtails determined in the same manner as in Example 1 were as shown in Table 11. From the transverse section echo image of the pelvic fin root of each yellowtail, the cross-sectional area of the pyloric caeca was determined in the same manner as the cross-sectional area of the red muscle of Example 4. Thereafter, the fish body was disassembled, and the pyloric caeca was taken out and weighed using a scale. The cross-sectional area of the pyloric caeca determined from the transverse section echo image and the weight of the pyloric caeca actually measured were as shown in Table 11.

[Table 11]

| n | Body Weight [g] | Fork length [cm] | Condition factor | Cross-sectional area of pyloric caeca [cm$^2$] | Weight of pyloric caeca [g] | Weight ratio of pyloric caeca to body weight [%] | Pyloric caeca amount estimation score |
|---|---|---|---|---|---|---|---|
| 1 | 5298 | 61.7 | 22.6 | 16.225 | 182.6 | 3.45 | 3.06 |

(continued)

| n | Body Weight [g] | Fork length [cm] | Condition factor | Cross-sectional area of pyloric caeca [cm$^2$] | Weight of pyloric caeca [g] | Weight ratio of pyloric caeca to body weight [%] | Pyloric caeca amount estimation score |
|---|---|---|---|---|---|---|---|
| 2 | 5240 | 62.2 | 21.8 | 14.636 | 160.3 | 3.06 | 2.79 |
| 3 | 4560 | 58.8 | 22.4 | 12.035 | 128.5 | 2.82 | 2.64 |
| 4 | 5080 | 61.5 | 21.8 | 13.743 | 167.6 | 3.30 | 2.71 |
| 5 | 4730 | 59.6 | 22.3 | 14.075 | 148.3 | 3.14 | 2.98 |
| 6 | 4530 | 59.7 | 21.3 | 12.951 | 150.9 | 3.33 | 2.86 |
| 7 | 4520 | 61.5 | 19.4 | 9.680 | 110.6 | 2.45 | 2.14 |
| 8 | 4510 | 59.8 | 21.1 | 10.767 | 135.1 | 3.00 | 2.39 |
| 9 | 4120 | 57.6 | 21.6 | 7.034 | 82.6 | 2.00 | 1.71 |
| 10 | 5020 | 61.3 | 21.8 | 9.655 | 133.6 | 2.66 | 1.92 |

Using the data shown in Table 11, the product-moment correlation coefficient between the cross-sectional area of the pyloric caeca determined from the transverse section echo image and the weight of the pyloric caeca actually measured was determined. As a result, the product-moment correlation coefficient was 0.94. From this result, it has been found that the weight of the pyloric caeca can also be estimated with high accuracy using the cross-sectional area of the pyloric caeca determined from the echo image.

A pyloric caeca amount estimation score was calculated by the following equation. The calculation results were as shown in Table 11.

Pyloric caeca amount estimation score = cross-sectional area of pyloric caeca (cm$^2$)/body weight (g) $\times$ 1000

The average value of the weight ratios of the pyloric caeca to the body weights of ten yellowtails shown in Table 11 was 2.92 wt.%, and the standard deviation was 0.42 wt.%. The average value of the weight ratios of the pyloric caeca to the body weights of eight yellowtails excluding n = 1, which has the maximum pyloric caeca amount estimation score, and n = 9, which has the minimum pyloric caeca amount estimation score, was 2.97 wt.%, and the standard deviation was 0.29 wt.%. Thus, when the pyloric caeca amount estimation score was used, it is possible to obtain a population with less variation in weight ratio of the pyloric caeca to the body weight in a non-destructive state.

Industrial Applicability

According to the present disclosure, an estimation method and an analysis device capable of smoothly estimating an amount of a red muscle of a marine fish without exposing the red muscle of the marine fish are provided. There is provided an estimation method and an analysis device capable of smoothly estimating an amount of a pyloric caeca of a marine fish without exposing the pyloric caeca. There is provided a method for farming a marine fish, the method being capable of efficiently providing a marine fish having a high market value flexibly to provide products that meet consumer preferences. There is provided a method for producing a processed product of a marine fish, the method being capable of efficiently providing a processed product of a marine fish having a high market value flexibly to provide products that meet consumer preferences. There is provided a processed product group of a marine fish having a sufficiently reduced variation in amount of a red muscle and having a high market value. There is provided a processed product group of a marine fish having a sufficiently reduced variation in amount of a pyloric caeca and having a high market value. There is provided an identified product of a marine fish having a high market value.

Reference Signs List

10 fish body, 20 non-destructive inspection unit, 22 probe, 24 control unit, 26 first display unit, 30 red muscle estimation unit, 32 calculation unit, 34 second display unit, 50, 50A identified product of marine fish, 52 container, 54, 54A. identification portion, 100 analysis device.

**Claims**

1. A method for estimating an amount of a red muscle, the method comprising: an information acquisition step of acquiring information on a red muscle in a fish body of a marine fish by non-destructive inspection; and an estimation step of estimating an amount of the red muscle included in the fish body based on the information.

2. The estimation method according to claim 1, wherein the information acquired in the information acquisition step includes a cross-sectional area of the red muscle determined from a cross-sectional image of the fish body, and the amount of the red muscle is estimated based on the cross-sectional area in the estimation step.

3. The estimation method according to claim 2, further comprising
a weight measurement step of measuring a weight of the fish body, wherein in the estimation step, the weight of the red muscle is estimated based on the weight of the fish body and the cross-sectional area of the red muscle.

4. The estimation method according to any one of claims 1 to 3, wherein the non-destructive inspection uses at least one selected from the group consisting of ultrasonic inspection, MRI inspection, and CT inspection.

5. The estimation method according to any one of claims 1 to 3, wherein the information is acquired from a transverse section image between the fourth vertebra to the twenty-second vertebra of the marine fish or a transverse section image between a second dorsal fin beginning portion and a vicinity of an anus.

6. The estimation method according to any one of claims 1 to 3, wherein the information is acquired from a transverse section image between the eleventh vertebra to the seventeenth vertebra or a transverse section image of a vicinity of the anus.

7. A method for producing a processed product of a marine fish, the method comprising a step of processing the marine fish in which the amount of the red muscle has been estimated by the estimation method according to any one of claims 1 to 3.

8. A method for farming a marine fish, the method comprising using an estimated value of an amount of a red muscle contained in a fish body of a marine fish as an index in any step of a farming process.

9. The method for farming a marine fish according to claim 8, the method further comprising a step of sorting the marine fish based on the estimated value.

10. The method for farming a marine fish according to claim 8 or 9, wherein the estimated value is a value estimated based on an image of the red muscle in the fish body acquired by non-destructive inspection.

11. A method for producing a processed product of a marine fish, the method comprising a step of processing the marine fish farmed by the farming method according to claim 8 or 9.

12. An analysis device comprising: a non-destructive inspection unit that acquires information on a red muscle in a fish body of a marine fish by non-destructive inspection; and a red muscle estimation unit that estimates an amount of the red muscle contained in the fish body of the marine fish based on the information.

13. The analysis device according to claim 12, wherein the non-destructive inspection unit includes at least one selected from the group consisting of an ultrasonic inspection unit, an MRI inspection unit, and a CT inspection unit.

14. An identified product of a marine fish, comprising: a fish body or a processed product of a marine fish; and an identification portion including information indicating that an amount of a red muscle contained in the fish body or the processed product has been estimated by non-destructive inspection.

15. A processed product group of a marine fish, comprising a plurality of processed products of a marine fish, wherein a standard deviation of weight ratios of red muscles contained in the plurality of processed products is 1.5 wt.% or less.

16. The processed product group of a marine fish according to claim 15, having a K value of 35% or less.

17. The processed product group of a marine fish according to claim 15 or 16, further comprising an identification portion including information on an estimated value of a weight of a red muscle contained in each of the plurality of processed products.

18. The processed product group of a marine fish according to claim 15 or 16, being obtained by processing a fish body of the marine fish in a round state or a processed product of the marine fish having a lower degree of processing than GG.

19. A processed product group of a marine fish obtained by processing a first marine fish that is a part of the marine fish sorted in the step of sorting the marine fish in the farming method according to claim 9.

20. A method for estimating an amount of a pyloric caeca, the method comprising: an information acquisition step of acquiring information on a pyloric caeca in a fish body of a marine fish by non-destructive inspection; and an estimation step of estimating an amount of the pyloric caeca contained in the fish body based on the information.

21. The estimation method according to claim 20, wherein the information acquired in the information acquisition step includes a cross-sectional area of the pyloric caeca determined from a cross-sectional image of the fish body, and in the estimation step, the amount of the pyloric caeca is estimated based on the cross-sectional area.

22. The estimation method according to claim 21, further comprising
a weight measurement step of measuring a weight of the fish body, wherein in the estimation step, a weight of the pyloric caeca is estimated based on the weight of the fish body and the cross-sectional area of the pyloric caeca.

23. The estimation method according to any one of claims 20 to 22, wherein the non-destructive inspection uses at least one selected from the group consisting of ultrasonic inspection, MRI inspection, and CT inspection.

24. The estimation method according to any one of claims 20 to 22, wherein the information is acquired from a transverse section image between a second vertebra to an eleventh vertebra of the marine fish or a transverse section image between a pectoral fin beginning portion and a second dorsal fin beginning portion.

25. The estimation method according to any one of claims 20 to 22, wherein the information is acquired from a transverse section image between the fourth vertebra to the ninth vertebra of the marine fish or a transverse section image of a vicinity of a pelvic fin root.

26. A method for producing a processed product of a marine fish, the method comprising a step of processing the marine fish in which the amount of the pyloric caeca has been estimated by the estimation method according to any one of claims 20 to 22.

27. A method for farming a marine fish, the method comprising using an estimated value of an amount of a pyloric caeca contained in a fish body of a marine fish as an index in any step of a farming process.

28. The method for farming a marine fish according to claim 27, the method further comprising a step of sorting the marine fish based on the estimated value.

29. The method for farming a marine fish according to claim 27 or 28, wherein the estimated value is a value estimated based on an image of the pyloric caeca in the fish body acquired by non-destructive inspection.

30. A method for producing a processed product of a marine fish, the method comprising a step of processing the marine fish farmed by the farming method according to claim 27 or 28.

31. An analysis device comprising:

a non-destructive inspection unit that acquires information on a pyloric caeca in a fish body of a marine fish by non-destructive inspection; and
a pyloric caeca estimation unit that estimates an amount of the pyloric caeca contained in the fish body based on the information.

32. The analysis device according to claim 31, wherein the non-destructive inspection unit includes at least one selected from the group consisting of an ultrasonic inspection unit, an MRI inspection unit, and a CT inspection unit.

33. An identified product of a marine fish, comprising: a fish body or a processed product of a marine fish; and an identification portion including information indicating that an amount of a pyloric caeca contained in the fish body or the processed product has been estimated by non-destructive inspection.

34. A processed product group of a marine fish, comprising a plurality of processed products of a marine fish, wherein a standard deviation of weight ratios of pyloric caeca contained in the plurality of processed products is 10.0 wt.% or less.

35. The processed product group of a marine fish according to claim 34, having a K value of 35% or less.

36. The processed product group of a marine fish according to claim 34 or 35, further comprising an identification portion including information on an estimated value of a weight of a pyloric caeca included in each of the plurality of processed products.

37. The processed product group of a marine fish according to claim 34 or 35, being obtained by processing a fish body of a marine fish in a round state or a processed product of marine fish having a lower degree of processing than GG.

38. A processed product group of a marine fish, being obtained by processing a first marine fish that is a part of the marine fish, the first marine fish being sorted in the step of sorting the marine fish in the farming method according to claim 28.

**Fig.1**

EP 4 711 756 A1

# Fig.2

*Fig.3*

Fig.4

(A)

(B)

(C)

Fig.5

(A)

(B)

## Fig.6

(A)

(B)

# EP 4 711 756 A1

<table>
<tr><td colspan="2">INTERNATIONAL SEARCH REPORT</td><td>International application No.</td></tr>
<tr><td colspan="2"></td><td>**PCT/JP2024/014128**</td></tr>
</table>

| A. | CLASSIFICATION OF SUBJECT MATTER |
|---|---|

***G01N 29/06***(2006.01)i; ***A01K 61/10***(2017.01)i; ***G01N 23/046***(2018.01)i; ***G01N 24/00***(2006.01)i
FI: G01N29/06; G01N23/046; G01N24/00 530Y; A01K61/10

According to International Patent Classification (IPC) or to both national classification and IPC

| B. | FIELDS SEARCHED |
|---|---|

Minimum documentation searched (classification system followed by classification symbols)

G01B,G01C,G01D,G01F,G01G,G01H,G01J,G01K,G01L,G01M,G01N,G01P,G01Q,G01R,G01S,G01T,G01V,G01W

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | 小畠　渥, 外, 血合肉含量の迅速測定法, 日本水産學會誌, June 1985, vol. 51, no. 6, pp. 1001-1004, in particular, see p. 1002, etc., (OBATAKE, Atsushi. A Rapid Method to Measure Dark Muscle Content in Fish. NIPPON SUISAN GAKKAISHI.) | 1-2, 4-14, 19 |
| A | | 3, 15-18, 20-38 |
| Y | 「世界のウェブアーカイブ｜国立国会図書館インターネット資料収集保存事業」, 02 November 2018, https://web.archive.org/web/20181102043736/https://www.jstage.jst.go.jp/article/suisan1932/61/3/61_3_331/_pdf, in particular, see p. 33, etc., (Web Archives of the World｜Web Archiving Project (WARP)) | 1-2, 4-14, 19 |
| A | | 3, 15-18, 20-38 |
| X | JP 2014-187890 A (FUJI OIL COMPANY LIMITED) 06 October 2014 (2014-10-06) claims 1-2 | 15, 17-18 |
| Y | | 16 |
| A | | 1-14, 19-38 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
|---|
| **PCT/JP2024/014128** |

| C. | DOCUMENTS CONSIDERED TO BE RELEVANT | |
|---|---|---|
| Category* | Citation of document, with indication, where appropriate, of the relevant passages | Relevant to claim No. |
| Y | WO 2019/116668 A1 (NIPPON SUISAN KAISHA, LTD.) 20 June 2019 (2019-06-20) paragraph [0143] | 16, 35 |
| A | | 1-15, 17-34, 36-38 |
| X | JP 2017-35078 A (NIPPON SUISAN KAISHA, LTD.) 16 February 2017 (2017-02-16) claim 3, paragraphs [0045], [0050] | 33-34, 36-38 |
| Y | | 35 |
| A | | 1-32 |

Form PCT/ISA/210 (second sheet) (July 2022)

## INTERNATIONAL SEARCH REPORT

| International application No. |
|---|
| **PCT/JP2024/014128** |

**Box No. III    Observations where unity of invention is lacking (Continuation of item 3 of first sheet)**

This International Searching Authority found multiple inventions in this international application, as follows:

Claims are classified into the following six inventions.
(Invention 1) Claims 1-7 and 12-14
Claims 1-7 and 12-14 have the special technical feature of a "method for estimating the amount of red muscle, the method comprising: an information acquisition step for acquiring information on the red muscle of the fish body of marine fish by non-destructive testing; and an estimation step for estimating, on the basis of the information, the amount of the red muscle present in the fish body" and are thus classified as invention 1.
(Invention 2) Claims 8-11 and 19
Claims 8-11 and 19 do not share a common technical feature with claim 1 classified as invention 1 (Although claim 8 states that "the estimated value of the amount of red muscle is used as an indicator in any step of the culture process," the "culture method" in claim 8 does not include a step for estimating the "estimated value of the amount of dark muscle.").
Also, claims 8-11 and 19 are not dependent on claim 1. Also, claims 8-11 and 19 are not substantially identical to or similarly closely related to any of the claims classified as invention 1.
Therefore, claims 8-11 and 19 cannot be classified as invention 1.
Also, claims 8-11 and 19 have the special technical feature of a "method for cultivating marine fish, the method involving using an estimated value of the amount of red muscle present in the fish body of the marine fish as an indicator in any step of the cultivating process" and are thus classified as invention 2.
(Invention 3) Claims 15-18
Claims 15-18 do not share a common technical feature with claim 1 classified as invention 1 and claim 8 classified as invention 2.
Also, claims 15-18 are not dependent on any of claims 1 and 8. In addition, claims 15-18 are not substantially identical to or similarly closely related to any of the claims classified as invention 1 or 2.
Therefore, claims 15-18 cannot be classified as either invention 1 or 2.
Also, claims 15-18 have the special technical feature of a "marine fish-processed product group comprising a plurality of marine fish-processed products, wherein the standard deviation of the weight ratios of red muscle present in the plurality of marine fish-processed products is 1.5 wt% or less" and are thus classified as invention 3.
(Invention 4) Claims 20-26 and 31-33
Claims 20-26 and 31-33 do not share a common technical feature with claim 1 classified as invention 1, claim 8 classified as invention 2, and claim 15 classified as invention 3.
Also, claims 20-26 and 31-33 are not dependent on any of claims 1, 8, and 15. In addition, claims 20-26 and 31-33 are not substantially identical to or similarly closely related to any of the claims classified as invention 1, 2, or 3.
Therefore, claims 20-26 and 31-33 cannot be classified as any of inventions 1, 2, and 3.
Also, claims 20-26 and 31-33 have the special technical feature of a "method for estimating the amount of appendix pylorica, the method comprising: an information acquisition step for acquiring information on the appendix pylorica of the fish body of marine fish by non-destructive testing; and an estimation step for estimating, on the basis of the information, the amount of the appendix pylorica present in the fish body" and are thus classified as invention 4.
(Invention 5) Claims 27-30 and 38
Claims 27-30 and 38 do not share a common technical feature with claim 1 classified as invention 1, claim 8 classified as invention 2, claim 15 classified as invention 3, and claim 20 classified as invention 4.(Although claim 27 states that "the estimated value of the amount of appendix pylorica is used as an indicator in any step of the culture process," the "culture method" in claim 27 does not include a step for estimating the "estimated value of the amount of appendix pylorica.").
Also, claims 27-30 and 38 are not dependent on any of claims 1, 8, 15, and 20. In addition, claims 27-30 and 38 are not substantially identical to or similarly closely related to any of the claims classified as invention 1, 2, 3, or 4.
Therefore, claims 27-30 and 38 cannot be classified as any of inventions 1, 2, 3, and 4.
Also, claims 27-30 and 38 have the special technical feature of a "method for cultivating marine fish, the method involving using an estimated value of the amount of appendix pylorica present in the fish body of the marine fish as an indicator in any step of the cultivating process" and are thus classified as invention 5.
(Invention 6) Claims 34-37
Claims 34-37 do not share a common technical feature with claim 1 classified as invention 1, claim 8 classified as invention 2, claim 15 classified as invention 3, claim 20 classified as invention 4, and claim 27 classified as invention 5.
Also, claim 34-37 are not dependent on any of claims 1, 8, 15, 20, and 27. In addition, claims 34-37 are not substantially identical to or similarly closely related to any of the claims classified as invention 1, 2, 3, 4, or 5.

Form PCT/ISA/210 (continuation of first sheet) (July 2022)

**EP 4 711 756 A1**

## INTERNATIONAL SEARCH REPORT

International application No.

**PCT/JP2024/014128**

**Box No. III    Observations where unity of invention is lacking (Continuation of item 3 of first sheet)**

Therefore, claims 34-37 cannot be classified as any of inventions 1, 2, 3, 4, and 5.

Also, claims 34-37 have the special technical feature of a "marine fish-processed product group comprising a plurality of marine fish-processed products, wherein the standard deviation of the weight ratios of appendix pylorica present in the plurality of marine fish-processed products is 10.0 wt% or less" and are thus classified as invention 6.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

38

# EP 4 711 756 A1

**INTERNATIONAL SEARCH REPORT**
Information on patent family members

International application No.

**PCT/JP2024/014128**

| Patent document cited in search report | | | Publication date (day/month/year) | Patent family member(s) | | | Publication date (day/month/year) |
|---|---|---|---|---|---|---|---|
| JP | 2014-187890 | A | 06 October 2014 | (Family: none) | | | |
| WO | 2019/116668 | A1 | 20 June 2019 | EP | 3725166 | A1 | |
| | | | | paragraph [0144] | | | |
| JP | 2017-35078 | A | 16 February 2017 | WO | 2017/026458 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009232864 A

- JP 2018029616 A

**Non-patent literature cited in the description**

- **AKIRA OCHIAI** ; **MIDORI SHOBO**. *Atlas of Fish Anatomy*, 1987, 192